# EUROPÄISCHE PATENTANMELDUNG

(11) **EP 4 253 271 A2**
(43) Veröffentlichungstag der Anmeldung: **04.10.2023**
(21) Anmeldenummer: 23186178.2
(22) Anmeldetag: 05.03.2020
(51) Int. Cl.: B65D 33/02

(54) **KUNSTSTOFFFOLIEN-BODENBEUTEL UND DESSEN VERWENDUNG SOWIE ZUSCHNITT FÜR EINEN KUNSTSTOFFFOLIEN-BODENBEUTEL**

(62) Teilanmeldung aus: 20161169.6
(71) Anmelder: Papier-Mettler KG, 54497 Morbach (DE)
(72) Erfinder: Donner, Georg, 54497 Morbach (DE)
(74) Vertreter: Metten, Karl-Heinz

(57) **Zusammenfassung**

Die vorliegende Erfindung betrifft einen Kunststofffolien-Bodenbeutel, bei dem im Übergang von der Kunststofffolienvorderwand zu den Seitenwandabschnitten der angrenzenden Kunststofffolienseitenwände die Kunststofffolienvorderwand und die Seitenwandabschnitte geschweißt, insbesondere miteinander verschweißt sind, und/oder, bei dem im Übergang von der Kunststofffolienrückwand zu den Seitenwandabschnitten der angrenzenden Kunststofffolienseitenwände die Kunststofffolienrückwand und die Seitenwandabschnitte geschweißt, insbesondere miteinander verschweißt sind, jeweils insbesondere unter Ausbildung eines Saums oder Hohlsaums. Die vorliegende Erfindung betrifft ferner einen Kunststofffolien-Bodenbeutel, bei dem mindestens eine, insbesondere beide Kunststofffolienseitenwände mit einer sich von oder beabstandet von dem Beutelöffnungsrand in Richtung des Beutelendes oder bis zum Beutelende erstreckenden, insbesondere nach außen weisenden Seitenfaltenschweiß- oder -klebenaht ausgestattet sind. Die Erfindung betrifft ferner Zuschnitte für die erfindungsgemäßen Kunststofffolien-Bodenbeutel sowie die Verwendung der erfindungsgemäßen Kunststofffolien-Bodenbeutel als, insbesondere vielfach, wiederverwendbarer Beutel oder wiederverwendbare Tasche.

## Beschreibung

Die vorliegende Erfindung betrifft einen wiederverwendbaren Kunststofffolien-Bodenbeutel und deren Verwendung sowie einen Zuschnitt für einen Kunststofffolien-Bodenbeutel.

Tragetaschen, wie sie üblicherweise vom Handel dem Kunden zum Transport von Waren zur Verfügung gestellt werden, sind regelmäßig aus Plastik oder Papier gefertigt. Waren diese Transportbehältnisse bislang vielfach für den einmaligen Gebrauch vorgesehen, werden nunmehr verstärkt geeignete Transportgebinde nachgefragt, die dauerhaft wiederverwendet werden können. Neben Tragetaschen aus Textilmaterialien wird hierfür häufig auch auf recycelfähige Kunststofftragetaschen, typischerweise in Form von Schlaufentaschen, zurückgegriffen. Derartige herkömmliche Schlaufentaschen finden sich beispielsweise in der DE 10116 920 A1, der WO 01/51372 A1 und der DE 40 12 897 A1 offenbart.

Wiederverwendbare Kunststofftragetaschen sind regelmäßig wesentlich größer dimensioniert als Einwegtragetaschen aus Kunststoff. Dies erfordert eine hinreichende Tragefestigkeit. Denn ansonsten steht bereits der mechanische Verschleiß einer Wiederverwendbarkeit im Wege. Mit größer dimensionierten recycelfähigen Kunststofftragetaschen geht allerdings das Problem der mangelnden Standfestigkeit einher. D.h. erst nachdem man die Kunststofftragetasche bis zu einem gewissen Grad befüllt hat, liegt die Befüllöffnung im Allgemeinen in einem Zustand vor, dass ein Befüllen gelingt, ohne dass die Taschenwände oder die Griffe mit einer Hand gehalten werden müssen.

Der vorliegenden Erfindung hat daher die Aufgabe zugrunde gelegen, einen Kunststoffbeutel zur Verfügung zu stellen, der nicht mehr mit den geschilderten Nachteilen des Stands der Technik behaftet ist und der insbesondere ein unbeeinträchtigtes, insbesondere beidhändiges, Befüllen gestattet, vor allem auch schon im unbefüllten Zustand. Insbesondere hat der vorliegenden Erfindung die Aufgabe zugrunde gelegen, einen Kunststoffbeutel verfügbar zu machen, der sich im unbefüllten Zustand in einer Weise aufstellen lässt, dass ein hinreichend großer Öffnungsquerschnitt erhalten wird, der selbstständig aufrechterhalten bleibt.

Demgemäß wurde gemäß einer ersten Ausführungsvariante ein Kunststofffolien-Bodenbeutel mit einer Beutelöffnung und einem gegenüberliegenden Beutelende gefunden, umfassend
- eine Kunststofffolienvorderwand mit einem Beutelöffnungsrand sowie einem ersten Seitenrand und einem gegenüberliegenden zweiten Seitenrand,
- eine Kunststofffolienrückwand mit einem Beutelöffnungsrand sowie mit einem ersten Seitenrand und einem gegenüberliegenden zweiten Seitenrand,
- eine erste Kunststofffolienseitenwand mit einem Beutelöffnungsrand sowie mit einer sich von oder beabstandet von dem Beutelöffnungsrand in Richtung des Beutelendes oder bis zum Beutelende erstreckenden ersten Seitenfaltenschweiß- oder - klebenaht oder ersten Seitenfalte, umfassend diesseits und jenseits der ersten Seitenfaltenschweiß- oder -klebenaht oder der ersten Seitenfalte einen ersten und einen zweiten Seitenwandabschnitt, die sich jeweils von der ersten Seitenfaltenschweiß- oder -klebenaht oder der ersten Seitenfalte bis zum ersten Seitenrand der Kunststofffolienvorderwand bzw. der Kunststofffolienlagerückwand erstrecken,
- eine zweite Kunststofffolienseitenwand mit einem Beutelöffnungsrand sowie mit einer sich von oder beabstandet von dem Beutelöffnungsrand in Richtung des Beutelendes oder bis zum Beutelende erstreckenden zweiten Seitenfaltenschweiß- oder - klebenaht oder zweiten Seitenfalte, umfassend diesseits und jenseits der zweiten Seitenfaltenschweiß- oder -klebenaht oder der zweiten Seitenfalte einen ersten und einen zweiten Seitenwandabschnitt, die sich jeweils von der zweiten Seitenfaltenschweiß- oder -klebenaht oder der zweiten Seitenfalte bis zum zweiten Seitenrand der Kunststofffolienvorderwand bzw. der Kunststofffolienrückwand erstrecken, und
- einen Kunststofffolienbeutelboden mit einer Innen- und einer Außenseite,
   wobei mindestens die erste Kunststofffolienseitenwand oder die zweite Kunststofffolienseitenwand mit der ersten bzw. der zweiten Seitenfaltenschweiß- oder - klebenaht ausgestattet ist.

Ein besonders hohes Maß an Standfestigkeit und an einer konstant weit geöffneten Beutelöffnung wird mit der ersten Ausführungsvariante des erfindungsgemäßen Kunststofffolien-Bodenbeutels dadurch erhalten, dass die erste Kunststofffolienseitenwand mit der ersten Seitenfaltenschweiß- oder -klebenaht, insbesondere Seitenfaltenschweißnaht, ausgestattet ist und dass die zweite Kunststofffolienseitenwand mit der zweiten Seitenfaltenschweiß-oder -klebenaht, insbesondere Seitenfaltenschweißnaht, ausgestattet ist. Bei der vorangehenden Ausführungsform liegt im Bereich der Seitenfalten von erster und zweiter Kunststofffolienseitenwand jeweils die Seitenfaltenschweiß- oder -klebenaht, insbesondere Seitenfaltenschweißnaht, vor. Grundsätzlich lässt sich die der Erfindung zugrunde liegende Aufgabe auch dadurch lösen, dass nur bei einer von zwei Folienseitenwänden die Seitenfalte als Seitenfaltenschweiß- oder -klebenaht, insbesondere Seitenfaltenschweißnaht, ausgebildet ist.

Im Sinne der vorliegenden Erfindung soll mit dem Begriff Seitenfaltenschweiß- oder - klebenaht nicht automatisch zum Ausdruck gebracht werden, dass über diese Schweiß-oder Klebenaht die ersten und einen zweiten Seitenwandabschnitte einer Seitenwand miteinander verbunden werden müssen. Vielmehr können die ersten und zweiten Seitenwandabschnitte auch in einem Stück vorliegen. Hierbei liegt dann im Übergang vom ersten zum zweiten Seitenwandabschnitt die Schweiß- oder Klebenaht, insbesondere Schweißnaht, vor.

Ein im unbefüllten Zustand frei und besonders stabil stehender Kunststofffolien-Bodenbeutel gemäß der ersten Ausführungsvariante mit einer dauerhaft hinreichend weit geöffneten Beutelöffnung wird in einer besonders bevorzugten Ausführungsform auch dadurch erhalten, dass die zwischen dem ersten Seitenwandabschnitt und dem zweiten Seitenwandabschnitt der ersten Seitenwand vorliegende erste Seitenfaltenschweiß- oder - klebenaht, insbesondere Seitenfaltenschweißnaht, einen nach außen gewandten Seitenfaltenschweiß- oder -klebenahtsaum darstellt oder dass die zwischen dem ersten Seitenwandabschnitt und dem zweiten Seitenwandabschnitt der zweiten Seitenwand vorliegende zweite Seitenfaltenschweiß- oder -klebenaht, insbesondere Seitenfaltenschweißnaht, einen nach außen gewandten Seitenfaltenschweiß- oder -klebenahtsaum darstellt. Besonders gute Resultate werden dadurch erhalten, dass sowohl die erste wie auch die zweite Seitenfaltenschweiß- oder -klebenaht, insbesondere Seitenfaltenschweißnaht, jeweils einen nach außen gewandten Seitenfaltenschweiß- oder -klebenahtsaum darstellen. Dieser Klebe- und insbesondere Schweißsaum verfügt in besonders geeigneten Ausgestaltungen über eine durchschnittliche Breite im Bereich von 1,0 bis 4,0 mm, bevorzugt im Bereich von 1,5 bis 3,5 mm.

Die der Erfindung zugrunde liegende Aufgabe wird auch besonders gut durch solche Kunststofffolien-Bodenbeutel gemäß der ersten Ausführungsvariante gelöst, bei denen im Übergang von der Kunststofffolienvorderwand zum ersten Seitenwandabschnitt der ersten Kunststofffolienseitenwand eine Falte, insbesondere Falz, vorliegt oder bei denen im Übergang von der Kunststofffolienvorderwand zum ersten Seitenwandabschnitt der zweiten Kunststofffolienseitenwand eine Falte, insbesondere Falz, vorliegt oder bei denen im Übergang von der Kunststofffolienrückwand zum zweiten Seitenwandabschnitt der ersten Kunststofffolienseitenwand eine Falte, insbesondere Falz, vorliegt oder bei denen im Übergang von der Kunststofffolienrückwand zum zweiten Seitenwandabschnitt der zweiten Kunststofffolienseitenwand eine Falte, insbesondere Falz, vorliegt. Hierbei sind solche Ausgestaltungen besonders bevorzugt, bei denen im Übergang von der Kunststofffolienvorderwand zum ersten Seitenwandabschnitt der ersten Kunststofffolienseitenwand eine Falte, insbesondere Falz, vorliegt, bei denen ferner im Übergang von der Kunststofffolienvorderwand zum ersten Seitenwandabschnitt der zweiten Kunststofffolienseitenwand eine Falte, insbesondere Falz, vorliegt, bei denen außerdem im Übergang von der Kunststofffolienrückwand zum zweiten Seitenwandabschnitt der ersten Kunststofffolienseitenwand eine Falte, insbesondere Falz, vorliegt und bei denen im Übergang von der Kunststofffolienrückwand zum zweiten Seitenwandabschnitt der zweiten Kunststofffolienseitenwand eine Falte, insbesondere Falz, vorliegt.

Die der Erfindung zugrunde liegende Aufgabe wird besonders vorteilhaft auch durch solche Kunststofffolien-Bodenbeutel gemäß der ersten Ausführungsvariante der Erfindung gelöst, bei denen im Übergang von der Kunststofffolienvorderwand zum ersten Seitenwandabschnitt der ersten Kunststofffolienseitenwand, insbesondere entlang und im Bereich der Falte, insbesondere Falz, die Kunststofffolienvorderwand und der erste Seitenwandabschnitt der ersten Kunststofffolienseitenwand miteinander verschweißt oder verklebt, insbesondere verschweißt, vorliegen, insbesondere unter Ausbildung eines Saums oder Hohlsaums, oder bei denen im Übergang von der Kunststofffolienvorderwand zum ersten Seitenwandabschnitt der zweiten Kunststofffolienseitenwand, insbesondere entlang und im Bereich der Falte, insbesondere Falz, die Kunststofffolienvorderwand und der zweite Seitenwandabschnitt der ersten Kunststofffolienseitenwand miteinander verschweißt oder verklebt, insbesondere verschweißt, vorliegen, insbesondere unter Ausbildung eines Saums oder Hohlsaums, oder bei denen im Übergang von der Kunststofffolienrückwand zum zweiten Seitenwandabschnitt der ersten Kunststofffolienseitenwand, insbesondere entlang und im Bereich der Falte, insbesondere Falz, die Kunststofffolienrückwand und der zweite Seitenwandabschnitt der ersten Kunststofffolienseitenwand miteinander verschweißt oder verklebt, insbesondere verschweißt, vorliegen, insbesondere unter Ausbildung eines Saums oder Hohlsaums, oder bei denen im Übergang von der Kunststofffolienrückwand zum zweiten Seitenwandabschnitt der zweiten Kunststofffolienseitenwand, insbesondere entlang und im Bereich der Falte, insbesondere Falz, die Kunststofffolienrückwand und der zweite Seitenwandabschnitt der zweiten Kunststofffolienseitenwand miteinander verschweißt oder verklebt, insbesondere verschweißt, vorliegen, insbesondere unter Ausbildung eines Saums oder Hohlsaums (diese Ausführungsform wird auch als dritte Ausführungsvariante des erfindungsgemäßen Kunststofffolien-Bodenbeutels bezeichnet). Hierbei sind solche Ausführungsformen ganz besonders geeignet, bei denen im Übergang von der Kunststofffolienvorderwand zum ersten Seitenwandabschnitt der ersten Kunststofffolienseitenwand, insbesondere entlang und im Bereich der Falte, insbesondere Falz, die Kunststofffolienvorderwand und der erste Seitenwandabschnitt der ersten Kunststofffolienseitenwand miteinander verschweißt oder verklebt, insbesondere verschweißt, vorliegen, und bei denen im Übergang von der Kunststofffolienvorderwand zum ersten Seitenwandabschnitt der zweiten Kunststofffolienseitenwand, insbesondere entlang und im Bereich der Falte, insbesondere Falz, die Kunststofffolienvorderwand und der zweite Seitenwandabschnitt der ersten Kunststofffolienseitenwand miteinander verschweißt oder verklebt, insbesondere verschweißt, vorliegen, und/oder, insbesondere und, bei denen im Übergang von der Kunststofffolienrückwand zum zweiten Seitenwandabschnitt der ersten Kunststofffolienseitenwand, insbesondere entlang und im Bereich der Falte, insbesondere Falz, die Kunststofffolienrückwand und der zweite Seitenwandabschnitt der ersten Kunststofffolienseitenwand miteinander verschweißt oder verklebt, insbesondere verschweißt, vorliegen, und bei denen im Übergang von der Kunststofffolienrückwand zum zweiten Seitenwandabschnitt der zweiten Kunststofffolienseitenwand, insbesondere entlang und im Bereich der Falte, insbesondere Falz, die Kunststofffolienrückwand und der zweite Seitenwandabschnitt der zweiten Kunststofffolienseitenwand miteinander verschweißt oder verklebt, insbesondere verschweißt, vorliegen.

Die der Erfindung zugrunde liegende Aufgabe wird des Weiteren gelöst durch eine zweite Ausführungsvariante eines erfindungsgemäßen Kunststofffolien-Bodenbeutels mit einer Beutelöffnung und einem gegenüberliegenden Beutelende, umfassend
- eine Kunststofffolienvorderwand mit einem Beutelöffnungsrand sowie einem ersten Seitenrand und einem gegenüberliegenden zweiten Seitenrand,
- eine Kunststofffolienrückwand mit einem Beutelöffnungsrand sowie mit einem ersten Seitenrand und einem gegenüberliegenden zweiten Seitenrand,
- eine erste Kunststofffolienseitenwand mit einem Beutelöffnungsrand sowie mit einer sich von oder beabstandet von dem Beutelöffnungsrand in Richtung des Beutelendes oder bis zum Beutelende erstreckenden ersten Seitenfalte, umfassend diesseits und jenseits der ersten Seitenfalte einen ersten und einen zweiten Seitenwandabschnitt, die sich jeweils von dem ersten Seitenfalz bis zum ersten Seitenrand der Kunststofffolienvorderwand bzw. der Kunststofffolienlagerückwand erstrecken,
- eine zweite Kunststofffolienseitenwand mit einem Beutelöffnungsrand sowie mit einer sich von oder beabstandet von dem Beutelöffnungsrand in Richtung des Beutelendes oder bis zum Beutelende erstreckenden zweiten Seitenfalte, umfassend diesseits und jenseits der zweiten Seitenfalte einen ersten und einen zweiten Seitenwandabschnitt, die sich jeweils von der zweiten Seitenfaltenschweiß- oder - klebenaht bis zum zweiten Seitenrand der Kunststofffolienvorderwand bzw. der Kunststofffolienrückwand erstrecken, und
- einen Kunststofffolienbeutelboden mit einer Innen- und einer Außenseite,
   wobei im Übergang von der Kunststofffolienvorderwand zum ersten Seitenwandabschnitt der ersten Kunststofffolienseitenwand, insbesondere entlang und im Bereich einer Falte oder Falz, die Kunststofffolienvorderwand und der erste Seitenwandabschnitt der ersten Kunststofffolienseitenwand miteinander verschweißt oder verklebt, insbesondere verschweißt, vorliegen, insbesondere unter Ausbildung eines Saums oder Hohlsaums, oder wobei
   im Übergang von der Kunststofffolienvorderwand zum ersten Seitenwandabschnitt der zweiten Kunststofffolienseitenwand, insbesondere entlang und im Bereich einer Falte oder Falz, die Kunststofffolienvorderwand und der zweite Seitenwandabschnitt der ersten Kunststofffolienseitenwand miteinander verschweißt oder verklebt, insbesondere verschweißt, vorliegen, insbesondere unter Ausbildung eines Saums oder Hohlsaums, oder wobei
   im Übergang von der Kunststofffolienrückwand zum zweiten Seitenwandabschnitt der ersten Kunststofffolienseitenwand, insbesondere entlang und im Bereich einer Falte oder Falz, die Kunststofffolienrückwand und der zweite Seitenwandabschnitt der ersten Kunststofffolienseitenwand miteinander verschweißt oder verklebt, insbesondere verschweißt, vorliegen, insbesondere unter Ausbildung eines Saums oder Hohlsaums, oder wobei
   im Übergang von der Kunststofffolienrückwand zum zweiten Seitenwandabschnitt der zweiten Kunststofffolienseitenwand, insbesondere entlang und im Bereich einer Falte oder Falz, die Kunststofffolienrückwand und der zweite Seitenwandabschnitt der zweiten Kunststofffolienseitenwand miteinander verschweißt oder verklebt, insbesondere verschweißt, vorliegen, insbesondere unter Ausbildung eines Saums oder Hohlsaums.

Bei der zweiten Ausführungsvariante des erfindungsgemäßen Kunststofffolien-Bodenbeutels wird eine besonders ausgeprägte Standfestigkeit und eigenständige Beutelöffnung auch dadurch erzielt, dass im Übergang von der Kunststofffolienvorderwand zum ersten Seitenwandabschnitt der ersten Kunststofffolienseitenwand, insbesondere entlang und im Bereich einer Falte oder Falz, die Kunststofffolienvorderwand und der erste Seitenwandabschnitt der ersten Kunststofffolienseitenwand miteinander verschweißt oder verklebt, insbesondere verschweißt, vorliegen, insbesondere unter Ausbildung eines Saums oder Hohlsaums, und im Übergang von der Kunststofffolienvorderwand zum ersten Seitenwandabschnitt der zweiten Kunststofffolienseitenwand, insbesondere entlang und im Bereich einer Falte oder Falz, die Kunststofffolienvorderwand und der zweite Seitenwandabschnitt der ersten Kunststofffolienseitenwand miteinander verschweißt oder verklebt, insbesondere verschweißt, vorliegen, insbesondere unter Ausbildung eines Saums oder Hohlsaums, und/oder, insbesondere und, im Übergang von der Kunststofffolienrückwand zum zweiten Seitenwandabschnitt der ersten Kunststofffolienseitenwand, insbesondere entlang und im Bereich einer Falte oder Falz, die Kunststofffolienrückwand und der zweite Seitenwandabschnitt der ersten Kunststofffolienseitenwand miteinander verschweißt oder verklebt, insbesondere verschweißt, vorliegen, insbesondere unter Ausbildung eines Saums oder Hohlsaums, sowie im Übergang von der Kunststofffolienrückwand zum zweiten Seitenwandabschnitt der zweiten Kunststofffolienseitenwand, insbesondere entlang und im Bereich einer Falte oder Falz, die Kunststofffolienrückwand und der zweite Seitenwandabschnitt der zweiten Kunststofffolienseitenwand miteinander verschweißt oder verklebt, insbesondere verschweißt, vorliegen, insbesondere unter Ausbildung eines Saums oder Hohlsaums.

Im Sinne der Erfindung liegt ein Falz vor, wenn dieser mithilfe eines hierfür vorgesehenen Werkzeugs oder einer hierfür vorgesehenen Maschine erzeugt worden ist. Derartige maschinell erzeugte Falze sind regelmäßig in Form einer Knickkante ausgebildet. Wird eine solche Knickkante ohne die mithilfe eines Werkzeugs erzeugt, soll hierunter im Sinne der Erfindung eine Falte verstanden werden.

Solche erfindungsgemäßen Kunststofffolien-Bodenbeutel der zweiten Ausführungsvariante haben sich als besonders geeignet für die Lösung der der Erfindung zugrunde liegenden Aufgabe erwiesen, bei denen die erste Seitenfalte abschnittsweise oder vollständig in Form einer, insbesondere nach außen gewandten, Seitenfaltenschweiß- oder -klebenaht ausgebildet ist oder bei denen die zweite Seitenfalte abschnittsweise oder vollständig in Form einer, insbesondere nach außen gewandten. Seitenfaltenschweiß- oder -klebenaht ausgebildet ist. Diese Ausführungsform entspricht im Wesentlichen der vorangehend geschilderten dritten Ausführungsvariante eines erfindungsgemäßen Kunststofffolien-Bodenbeutels. Die dritte Ausführungsvariante eines erfindungsgemäßen Kunststofffolien-Bodenbeutels vereint die Ausführungsformen von erster und zweiter Ausführungsvariante hinsichtlich der Seitenfaltenschweiß- oder -klebenaht bzw. -nähte und der Verschweißung oder Verklebung von Kunststofffolienvorder- bzw. -rückwand mit den jeweiligen Kunststofffolienseitenwänden. Ein Zugang zu der dritten Ausführungsvariante eines erfindungsgemäßen Kunststofffolien-Bodenbeutels ist somit ausgehend von der ersten Ausführungsvariante wie auch ausgehend von der zweiten Ausführungsvariante möglich.

Besonders gute Resultate werden auch bei der zweiten Ausführungsvariante dadurch erhalten, dass sowohl die erste wie auch die zweite Seitenfaltenschweiß- oder -klebenaht, insbesondere Seitenfaltenschweißnaht, jeweils einen nach außen gewandten Seitenfaltenschweiß- oder -klebenahtsaum darstellen. Dieser Klebe- und insbesondere Schweißsaum verfügt auch bei der zweiten Ausführungsvariante in besonders geeigneten Ausgestaltungen über eine durchschnittliche Breite im Bereich von 1,0 bis 4,0 mm, bevorzugt im Bereich von 1,5 bis 3,5 mm.

Eine ganz besonders gute Standfestigkeit sowie eine äußerst zuverlässige Zurverfügungstellung einer zur Befüllung geeigneten Beutelöffnung eines freistehenden erfindungsgemäßen Kunststofffolien-Bodenbeutels lässt sich überraschend sowohl für die erste wie auch die zweite Ausführungsvariante erzielen, wenn dafür Sorge getragen wird, dass die Kunststofffolienvorderwand im Bereich des Beutelöffnungsrands innen- und/oder außenseitig einen ein- oder mehrlagigen Folienstreifen aufweist oder dass die Kunststofffolienrückwand im Bereich des Beutelöffnungsrands innen- und/oder außenseitig einen ein- oder mehrlagigen Folienstreifen aufweist oder dass die erste Kunststofffolienseitenwand im Bereich des Beutelöffnungsrands innen- und/oder außenseitig einen ein- oder mehrlagigen Folienstreifen aufweist oder dass die zweite Kunststofffolienseitenwand im Bereich des Beutelöffnungsrands innen- und/oder außenseitig einen ein- oder mehrlagigen Folienstreifen aufweist. Hierbei sind solche Ausführungsformen besonders bevorzugt, bei denen die Kunststofffolienvorderwand im Bereich des Beutelöffnungsrands innen- und/oder außenseitig, insbesondere innenseitig, einen ein- oder mehrlagigen Folienstreifen aufweist und die Kunststofffolienrückwand im Bereich des Beutelöffnungsrands innen- und/oder außenseitig, insbesondere innenseitig, einen ein- oder mehrlagigen Folienstreifen aufweist. Ganz besonders bevorzugt sind hierbei derartige Ausführungsformen, bei denen die Kunststofffolienvorderwand im Bereich des Beutelöffnungsrands innen- und/oder außenseitig, insbesondere innenseitig, einen ein- oder mehrlagigen Folienstreifen aufweist, die Kunststofffolienrückwand im Bereich des Beutelöffnungsrands innen- und/oder außenseitig, insbesondere innenseitig, einen ein- oder mehrlagigen Folienstreifen aufweist, die erste Kunststofffolienseitenwand im Bereich des Beutelöffnungsrands innen- und/oder außenseitig, insbesondere innenseitig, einen ein- oder mehrlagigen Folienstreifen aufweist und die zweite Kunststofffolienseitenwand im Bereich des Beutelöffnungsrands innen- und/oder außenseitig, insbesondere innenseitig, einen ein- oder mehrlagigen Folienstreifen aufweist.

Dabei stellt der ein- oder mehrlagige Folienstreifen, insbesondere als Bestandteil der Kunststofffolienvorderwand, der Kunststofffolienrückwand, der ersten Kunststofffolienseitenwand und/oder der zweiten Kunststofffolienseitenwand, im Allgemeinen einen Öffnungsrandsaum dar. Dabei können die Folienstreifen besonders zweckmäßig jeweils auch einstückig mit der Kunststofffolienvorderwand, der Kunststofffolienrückwand, der ersten Kunststofffolienseitenwand bzw. der zweiten Kunststofffolienseitenwand ausgebildet sein.

Demgemäß kann der Öffnungsrand in einer Ausführungsform durch eine Faltung am oberen Ende der Kunststofffolienvorderwand oder der Kunststofffolienrückwand gebildet werden. Kommt beispielsweise eine mehrlagige Kunststofffolienvorderwand oder Kunststofffolienrückwand zum Einsatz, kann der ein- oder mehrlagige Folienstreifen durch Umschlagen einer oder mehrerer Lagen dieses mehrlagigen Systems erhalten werden.

Für viele Anwendungen hat es sich besonders zweckmäßig erwiesen, für den erfindungsgemäßen Kunststofffolien-Bodenbeutel der ersten und der zweiten Ausführungsvariante auf ein ein- oder mehrlagiges Folienmaterial für die Kunststofffolienvorderwand und/oder Kunststofffolienrückwand zurückzugreifen. Geeignete Kunststoffmaterialien stellen hierbei Polyolefine, bevorzugt Polyethylen und/oder Polypropylen, besonders bevorzugt HD-Polyethylen, dar.

In einer Ausführungsform kann der erfindungsgemäße Kunststofffolien-Bodenbeutel im Wesentlichen einstückig ausgebildet sein.

In einer weiteren, besonders zweckmäßigen Ausführungsform können die Kunststofffolienvorderwand, der Kunststofffolienbeutelboden und die Kunststofffolienrückwand zusammenhängend, bevorzugt ohne Verbindungsnaht und besonders bevorzugt einstückig vorliegen.

In einer weiteren, ebenfalls besonders zweckmäßigen Ausführungsform können die Kunststofffolienvorderwand, der erste Seitenwandabschnitt der ersten Kunststofffolienseitenwand und der erste Seitenwandabschnitt der zweiten Kunststofffolienseitenwand zusammenhängend, bevorzugt ohne Verbindungsnaht und besonders bevorzugt einstückig vorliegen.

Und in einer weiteren, ebenfalls besonders zweckmäßigen Ausführungsform können zusätzlich oder alternativ die Kunststofffolienrückwand, der zweite Seitenwandabschnitt der ersten Kunststofffolienseitenwand und der zweite Seitenwandabschnitt der zweiten Kunststofffolienseitenwand zusammenhängend, bevorzugt ohne Verbindungsnaht und besonders bevorzugt einstückig vorliegen.

Unter Verwendung der vorangehend beschriebenen Ausführungsformen besonders zweckmäßigen Ausführungsformen kann der erfindungsgemäße Kunststofffolien-Bodenbeutel der ersten und der zweiten Ausführungsvariante in einer Weise gefertigt werden, dass im Bereich der ersten Seitenfaltenschweiß- oder -klebenaht die die erste Seitenwand bildenden ersten und einen zweiten Seitenwandabschnitte miteinander verbunden werden und dass im Bereich der zweiten Seitenfaltenschweiß- oder -klebenaht die die zweite Seitenwand bildenden ersten und zweiten Seitenwandabschnitte miteinander verbunden werden.

Ein erfindungsgemäßer Kunststofffolien-Bodenbeutel zeichnet sich demgemäß in einer Ausführungsform auch dadurch aus, dass dieser neben der ersten und zweiten Seitenfaltenschweiß- oder -klebenaht im Bereich der Kunststofffolienvorderwand, der Kunststofffolienrückwand, der ersten Kunststofffolienseitenwand und der zweiten Kunststofffolienseitenwand, insbesondere einschließlich der jeweiligen Übergänge, keine weitere sich vom oder beabstandet vom Beutelöffnungsrand in Richtung des Beutelendes oder bis zum Beutelende erstreckende Schweiß- oder -klebenaht aufweist.

Ferner kann für die erfindungsgemäßen Kunststofffolien-Bodenbeutel vorgesehen sein, dass im Übergang von der Kunststofffolienvorderwand zum Kunststofffolienbeutelboden eine Falte oder ein Falz (auch erste Bodenfalte bzw. Bodenfalz genannt) und/oder dass im Übergang von der Kunststofffolienvorderwand zum Kunststofffolienbeutelboden, insbesondere entlang und im Bereich der Falte oder Falz, die Kunststofffolienvorderwand und der Kunststofffolienbeutelboden geschweißt sind, insbesondere miteinander verschweißt, oder miteinander verklebt vorliegen, insbesondere unter Ausbildung eines Saums oder Hohlsaums, vorliegt. Ferner kann alternativ oder insbesondere zusätzlich vorgesehen sein, dass im Übergang von der Kunststofffolienrückwand zum Kunststofffolienbeutelboden eine Falte oder Falz (auch zweite Bodenfalte oder -falz genannt) vorliegt und/oder dass im Übergang von der Kunststofffolienrückwand zum Kunststofffolienbeutelboden, insbesondere entlang und im Bereich der Falte oder Falz, die Kunststofffolienrückwand und der Kunststofffolienbeutelboden geschweißt sind, insbesondere miteinander verschweißt, oder miteinander verklebt vorliegen, insbesondere unter Ausbildung eines Saums oder Hohlsaums. Auch kann der Kunststofffolienbeutelboden eine Mittelfalz aufweisen, die sich beabstandet vom oder vom ersten Seitenrand in Richtung des oder bis zum gegenüberliegenden zweiten Seitenrand erstreckt.

Eine besonders ausgeprägte Standfestigkeit lässt sich auch mit solchen Kunststofffolien-Bodenbeutel erhalten, bei denen
im Übergang von der ersten Kunststofffolienseitenwand zum Kunststofffolienbeutelboden eine Falte oder Falz (auch dritte Bodenfalte oder -falz genannt) vorliegt oder bei denen insbesondere im Übergang von der ersten Kunststofffolienseitenwand zum Kunststofffolienbeutelboden, insbesondere entlang und im Bereich der Falte oder Falz, die erste Kunststofffolienseitenwand und der Kunststofffolienbeutelboden geschweißt sind, insbesondere miteinander verschweißt, oder miteinander verklebt vorliegen, insbesondere unter Ausbildung eines Saums oder Hohlsaums. Ferner kann alternativ oder insbesondere zusätzlich vorgesehen sein, dass im Übergang von der zweiten Kunststofffolienseitenwand zum Kunststofffolienbeutelboden eine Falte oder Falz (auch vierte Bodenfalte oder -falz genannt) vorliegt oder bei denen insbesondere im Übergang von der zweiten Kunststofffolienseitenwand zum Kunststofffolienbeutelboden, insbesondere entlang und im Bereich der Falte oder Falz, die zweite Kunststofffolienseitenwand und der Kunststofffolienbeutelboden geschweißt sind, insbesondere miteinander verschweißt, oder miteinander verklebt vorliegen, insbesondere unter Ausbildung eines Saums oder Hohlsaums.

Als besonders zweckmäßig zur Lösung der der Erfindung zugrunde liegenden Aufgabe haben sich auch solche erfindungsgemäßen Kunststofffolien-Bodenbeutel erwiesen, bei denen sich von einem ersten Mündungspunkt, bei dem der erste Bodenfalz in den ersten Seitenrand der Kunststofffolienvorderwand mündet, und der beabstandet von dem Kunststofffolienbeutelboden endenden ersten Seitenfaltenschweiß- oder -klebenaht eine erste Schweiß-oder Klebenaht, insbesondere Schweißnaht, erstreckt und dass
sich von einem zweiten Mündungspunkt, bei dem der zweite Bodenfalz in den ersten Seitenrand der Kunststofffolienrückwand mündet, und der beabstandet von dem Kunststofffolienbeutelboden endenden ersten Seitenfaltenschweiß- oder -klebenaht eine zweite Schweiß- oder Klebenaht, insbesondere Schweißnaht, erstreckt und/oder dass
sich von einem dritten Mündungspunkt, bei dem der erste Bodenfalz in den zweiten Seitenrand der Kunststofffolienvorderwand mündet, und
der beabstandet von dem Kunststofffolienbeutelboden endenden zweiten Seitenfaltenschweiß- oder -klebenaht eine dritte Schweiß- oder Klebenaht, insbesondere Schweißnaht, erstreckt und dass
sich von einem vierten Mündungspunkt, bei dem der zweite Bodenfalz in den zweiten Seitenrand der Kunststofffolienrückwand mündet, und der beabstandet von dem Kunststofffolienbeutelboden endenden zweiten Seitenfaltenschweiß- oder -klebenaht eine vierte Schweiß- oder Klebenaht, insbesondere Schweißnaht, erstreckt. Hierbei weisen die die erste Seitenfaltenschweiß- oder -klebenaht, die erste Schweiß- oder Klebenaht und die zweite Schweiß- oder Klebenaht vorzugsweise einen gemeinsamen Mündungsbereich auf. Alternativ und insbesondere zusätzlich weisen auch die zweite Seitenfaltenschweiß- oder - klebenaht, die dritte Schweiß- oder Klebenaht und die vierte Schweiß- oder Klebenaht einen gemeinsamen Mündungsbereich auf.

In einer besonders gut die der Erfindung zugrunde liegende Aufgabe lösenden Ausführungsform der ersten Ausführungsvariante der Erfindung ist vorgesehen, dass die erste Seitenfaltenschweiß- oder -klebenaht und die zweite Seitenfaltenschweiß- oder -klebenaht sich bis zum Beutelende erstrecken, insbesondere nicht mit dem Kunststofffolienbeutelboden verklebt oder verschweißt sind, dass sich von einem ersten Mündungspunkt, bei dem der erste Bodenfalz in den ersten Seitenrand der Kunststofffolienvorderwand mündet, und der ersten Seitenfaltenschweiß- oder -klebenaht, beabstandet von dem Kunststofffolienbeutelboden, eine erste Schweiß- oder Klebenaht, insbesondere Schweißnaht, erstreckt und dass sich von einem zweiten Mündungspunkt, bei dem der zweite Bodenfalz in den ersten Seitenrand der Kunststofffolienrückwand mündet, und der ersten Seitenfaltenschweiß-oder -klebenaht beabstandet von dem Kunststofffolienbeutelboden eine zweite Schweiß-oder Klebenaht, insbesondere Schweißnaht, erstreckt und/oder, insbesondere und, dass sich von einem dritten Mündungspunkt, bei dem der erste Bodenfalz in den zweiten Seitenrand der Kunststofffolienvorderwand mündet, und der zweiten Seitenfaltenschweiß- oder - klebenaht beabstandet von dem Kunststofffolienbeutelboden eine dritte Schweiß- oder Klebenaht, insbesondere Schweißnaht, erstreckt und dass sich von einem vierten Mündungspunkt, bei dem der zweite Bodenfalz in den zweiten Seitenrand der Kunststofffolienrückwand mündet, und der zweiten Seitenfaltenschweiß- oder -klebenaht beabstandet von dem Kunststofffolienbeutelboden eine vierte Schweiß- oder Klebenaht, insbesondere Schweißnaht, erstreckt.

Hierbei weisen die die erste Seitenfaltenschweiß- oder -klebenaht, die erste Schweiß- oder Klebenaht und die zweite Schweiß- oder Klebenaht vorzugsweise einen gemeinsamen ersten Mündungsbereich auf. Alternativ und insbesondere zusätzlich weisen auch die zweite Seitenfaltenschweiß- oder -klebenaht, die dritte Schweiß- oder Klebenaht und die vierte Schweiß- oder Klebenaht einen gemeinsamen zweiten Mündungsbereich auf.

Insbesondere solche Ausführungsformen der ersten Ausführungsvariante der Erfindung sind besonders gut geeignet, die der Erfindung zugrunde liegende Aufgabe zu lösen, bei denen in dem Areal, das sich zwischen dem ersten Mündungspunkt, bei dem der erste Bodenfalz in den ersten Seitenrand der Kunststofffolienvorderwand mündet, und dem zweiten Mündungspunkt, bei dem der zweite Bodenfalz in den ersten Seitenrand der Kunststofffolienrückwand mündet, und dem ersten Mündungsbereich aufspannt, zwei dreieckförmige Kunststofffolienabschnitte benachbart vorliegen, insbesondere aneinander anliegen, und/oder, insbesondere und, bei denen in dem Areal, das sich zwischen dem dritten Mündungspunkt, bei dem der erste Bodenfalz in den zweiten Seitenrand der Kunststofffolienvorderwand mündet, und dem vierten Mündungspunkt, bei dem der zweite Bodenfalz in den zweiten Seitenrand der Kunststofffolienrückwand mündet, und dem zweiten Mündungsbereich aufspannt, zwei dreieckförmige Kunststofffolienabschnitte benachbart vorliegen, insbesondere aneinander anliegen. Hierdurch wird ein besonders hohes Maß an Standstabilität erhalten.

Die erfindungsgemäßen Kunststofffolien-Bodenbeutel der ersten und zweiten Ausführungsvariante sind bevorzugt auch mindestens einem ersten Trageelement und/oder mindestens einem zweiten Trageelemente ausgestattet. Hierbei kann es sich um ein Griffloch, eine Halteschlaufe oder einen Haltegriff handeln. Die Halteschlaufe oder der Haltegriff sind dabei bevorzugt an oder benachbart zur Beutelöffnung an der Kunststofffolienvorderwand und/oder an der Kunststofffolienrückwand angebracht bzw. befestigt.

Demgemäß können zweckmäßigerweise das erste Trageelement bzw. dessen Anbindungsabschnitte im Bereich des ein- oder mehrlagige Folienstreifens, insbesondere Öffnungsrandsaums, der Kunststofffolienvorderwand befestigt sein oder vorliegen und das zweite Trageelement bzw. dessen Anbindungsabschnitte im Bereich des ein- oder mehrlagige Folienstreifens, insbesondere Öffnungsrandsaums, der Kunststofffolienrückwand befestigt sein oder vorliegen.

Mit der vorangehend geschilderten erfindungsgemäßen Ausführungsform einer Kunststofftragetasche wird neben einem hervorragenden Tragekomfort auch eine verbesserte mechanische Belastbarkeit insbesondere von wiederverwendbaren Kunststofftragetasche sichergestellt. Sowohl die Halteschlaufe als solche wie auch deren Anbindung an den Korpus der Kunststofftragetasche zeichnen sich durch eine besondere Reißfestigkeit aus.

Durch die Kombination der Merkmale, die den Verstärkungsbereich ausbilden, mit den Merkmalen der Halteschlaufe wird eine besonders robuste und belastbare Kunststofftragetasche erhalten.

Des Weiteren sind unter den erfindungsgemäßen Kunststofffolien-Bodenbeuteln solche besonders geeignet die der Erfindung zugrunde liegende Aufgabe zu lösen, bei denen die mindestens eine Lage einer mehrlagigen Vorder- und/oder Rückwand, insbesondere die Innenlage, eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt. Hierdurch kann eine textilartige Anmutung in der Handhabung, beispielsweise beim Zusammenfalten, der erfindungsgemäßen Kunststofftragetasche verstärkt werden.

Darüber hinaus hat sich überraschend gezeigt, dass sich ein besonders einwandfreies aufstellen der erfindungsgemäßen Kunststofffolien-Bodenbeutel auch dadurch einstellt, dass der Kunststofffolienbeutelboden ein, insbesondere auf der Außenseite angebrachtes, Prägeschweißmuster aufweist. Dieses Prägeschweißmuster kann dabei zum Beispiel in Form einer Wabenstruktur, Linienstruktur oder Ringstruktur ausgebildet sein. Selbstverständlich sind auch weitere, insbesondere geometrische, Prägemuster möglich. Für viele Anwendungen hat sich die Verwendung einer Wabenstruktur als besonders geeignet erwiesen.

Alternativ oder zusätzlich können die erfindungsgemäßen Kunststofffolien-Bodenbeutel auch mit einem Einlegeboden ausgestattet sein. Hierbei wird bevorzugt auf solche Einlegeboden zurückgegriffen, die steifer ausgestaltet sind als der Kunststofffolienbeutelboden.

Durch die Verwendung eines, zweckmäßigerweise herausnehmbaren, insbesondere losen, Einlegebodens kann ebenfalls die Standfestigkeit der erfindungsgemäßen Kunststofffolien-Bodenbeutel erhöht werden. Auch gelingt bei Verwendung von Einlegeböden ein besonders zuverlässiges Offenhalten des noch unbefüllten Kunststofffolien-Bodenbeutels. Der Einlegeboden kann zum Beispiel aus LD-Polyethylen, HD- Polyethylen oder Polypropylen gefertigt sein.

Außerdem wird die der Erfindung zugrunde liegende Aufgabe gelöst durch einen Zuschnitt, auch erster Zuschnitt genannt, für einen Kunststofffolien-Bodenbeutel, insbesondere einen erfindungsgemäßen Kunststofffolien-Bodenbeutel, aus einer ein- oder mehrlagigen Kunststofffolie mit einem Kunststofffolienvorderwandabschnitt, einem sich hieran entlang einem ersten Bodenseitenrand, insbesondere einstückig, anschließenden im Wesentlichen rechteckigen oder quadratischen Kunststofffolienbeutelbodenabschnitt und einem sich an diesen, gegenüberliegend zum Kunststofffolienvorderwandabschnitt, entlang einem zweiten Bodenseitenrand, insbesondere einstückig, anschließenden Kunststofffolienrückwandabschnitt, wobei sich an die gegenüberliegenden Bodenseitenränder des Kunststofffolienbeutelbodenabschnitts, die nicht mit dem Kunststofffolienvorderwandabschnitt und dem Kunststofffolienrückwandabschnitt verbunden sind (auch dritte und vierte Bodenseitenränder genannt), jeweils dreieckförmige oder trapezförmige Abschnitte, insbesondere einstückig, anschließen, wobei der Kunststofffolienvorderwandabschnitt, an einander gegenüberliegenden Seitenrandverläufen, insbesondere einstückig, jeweils einen Erstreckungsabschnitt, mit einem geneigten bodenseitigen Rand aufweist, der bei Anordnung des Zuschnitts in einer Ebene mit dem ersten Bodenseitenrand einem stumpfen Winkel (α) bildet, wobei der Abstand der gegenüberliegenden Seitenrandverläufen des Kunststofffolienvorderwandabschnitts im Wesentlichen dem Abstand zwischen dem dritten und vierten Bodenseitenrand entspricht und wobei der Kunststofffolienrückwandabschnitt, an einander gegenüberliegenden Seitenrandverläufen, insbesondere einstückig, jeweils einen Erstreckungsabschnitt, mit einem geneigten bodenseitigen Rand aufweist, der bei Anordnung des Zuschnitts in einer Ebene mit dem zweiten Bodenseitenrand einem stumpfen Winkel (α')' bildet, wobei der Abstand der gegenüberliegenden Seitenrandverläufen des Kunststofffolienrückwandabschnitts im Wesentlichen dem Abstand zwischen dem dritten und vierten Bodenseitenrand entspricht.

Außerdem wird die der Erfindung zugrunde liegende Aufgabe gelöst durch einen Zuschnitt, auch zweiter Zuschnitt genannt, für einen Kunststofffolien-Bodenbeutel, insbesondere einen erfindungsgemäßen Kunststofffolien-Bodenbeutel, besonders bevorzugt einen erfindungsgemäßen Kunststofffolien-Bodenbeutel gemäß der dritten Ausführungsvariante,
mit einer im Wesentlichen rechteckigen oder quadratischen Grundform und aus einer einoder mehrlagigen Kunststofffolie, umfassend einen Kunststofffolienvorderwandabschnitt, einen sich hieran entlang einem ersten Bodenseitenrand, insbesondere einstückig, anschließenden im Wesentlichen rechteckigen oder quadratischen Kunststofffolienbeutelbodenabschnitt, enthaltend einander gegenüberliegende dritte und vierte Bodenseitenränder, und einen sich an diesen, gegenüberliegend zum Kunststofffolienvorderwandabschnitt, entlang einem zweiten Bodenseitenrand, insbesondere einstückig, anschließenden Kunststofffolienrückwandabschnitt, wobei der Kunststofffolienvorderwandabschnitt an einander gegenüberliegenden Seitenrandverläufen, insbesondere einstückig, jeweils einen im Wesentlichen rechteckförmigen Erstreckungsabschnitt aufweist, wobei der Kunststofffolienrückwandabschnitt an einander gegenüberliegenden Seitenrandverläufen, insbesondere einstückig, jeweils einen im Wesentlichen rechteckförmigen Erstreckungsabschnitt aufweist, und wobei entlang der einander gegenüberliegenden Seitenrandverläufe des Kunststofffolienvorderwandabschnitts jeweils eine Schweißnaht, insbesondere unter Ausbildung eines Saums oder Hohlsaums, vorliegt und wobei entlang der einander gegenüberliegenden Seitenrandverläufe des Kunststofffolienrückwandabschnitts jeweils eine Schweißnaht, insbesondere unter Ausbildung eines Saums oder Hohlsaums, vorliegt.

In einer besonders zweckmäßigen Ausführungsform verfügt der zweite Zuschnitt entlang der dritten und vierten Bodenseitenränder jeweils über eine Schweißnaht, insbesondere unter Ausbildung eines Saums oder Hohlsaums, wobei vorzugsweise diese Schweißnähte an ihren einander gegenüberliegenden Enden im Wesentlichen übergangslos übergehen in die Schweißnähte, die entlang der korrespondierenden Seitenrandverläufe vorliegen.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigen
- Figur 1: eine schematische perspektivische Seitenansicht einer Ausführungsform der ersten Ausführungsvariante eines erfindungsgemäßen Kunststofffolien-Bodenbeutels,
- Figur 2: eine schematische perspektivische Draufsicht auf die Ausführungsform des Kunststofffolien-Bodenbeutels gemäß Figur 1,
- Figur 3: eine schematische perspektivische Seitenansicht der zweiten Ausführungsvariante eines erfindungsgemäßen Kunststofffolien-Bodenbeutels,
- Figur 4: eine schematische perspektivische Draufsicht auf die Ausführungsform des Kunststofffolien-Bodenbeutels gemäß Figur 3,
- Figur 5: eine schematische perspektivische Seitenansicht der dritten Ausführungsvariante eines erfindungsgemäßen Kunststofffolien-Bodenbeutels,
- Figur 6: eine schematische perspektivische Draufsicht auf die Ausführungsform des Kunststofffolien-Bodenbeutels gemäß Figur 5,
- Figur 7: eine schematische perspektivische Seitenansicht einer bevorzugten Ausgestaltung der dritten Ausführungsvariante eines erfindungsgemäßen Kunststofffolien-Bodenbeutels,
- Figur 8: eine schematische perspektivische Draufsicht auf einen Folienzuschnitt für einen erfindungsgemäßen Kunststofffolien-Bodenbeutel gemäß Figur 1,
- Figur 9: eine schematische perspektivische Seitenansicht einer weiteren Ausführungsform der dritten Ausführungsvariante eines erfindungsgemäßen Kunststofffolien-Bodenbeutels,
- Figur 10: eine schematische perspektivische Draufsicht auf eine weitere Ausführungsform eines Folienzuschnitts für einen erfindungsgemäßen KunststofffolienBodenbeutel gemäß Figur 9,
- Figur 11: eine schematische perspektivische Draufsicht auf die Unterseite des erfindungsgemäßen Kunststofffolien-Bodenbeutels gemäß Figur 9,
- Figur 12: eine schematische perspektivische Draufsicht auf die Unterseite eines erfindungsgemäßen Kunststofffolien-Bodenbeutels und
- Figur 13: eine schematische perspektivische Draufsicht auf eine weitere Ausführungsform eines Folienzuschnitts gemäß Figur 10.

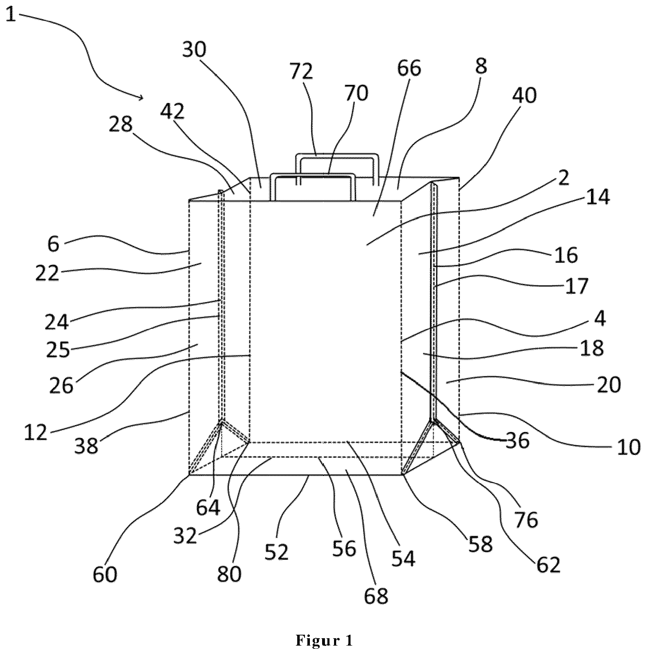

Die Figur 1 zeigt die erste Ausführungsvariante eines erfindungsgemäßen Kunststofffolien-Bodenbeutels (1) mit einer Beutelöffnung (30) und einem gegenüberliegenden Beutelende (32), einer Kunststofffolienvorderwand (2) mit einem Beutelöffnungsrand sowie einem ersten Seitenrand (4) und einem gegenüberliegenden zweiten Seitenrand (6) und einer Kunststofffolienrückwand (8) mit einem Beutelöffnungsrand sowie mit einem ersten Seitenrand (10) und einem gegenüberliegenden zweiten Seitenrand (12). Dieser Kunststofffolien-Bodenbeutels (1) ist ferner mit einer ersten Kunststofffolienseitenwand (14) mit einem Beutelöffnungsrand sowie mit einer zweiten Kunststofffolienseitenwand (22) mit einem Beutelöffnungsrand ausgestattet. Die erste Kunststofffolienseitenwand (14) verfügt über eine sich von dem Beutelöffnungsrand bis nahezu zum Beutelende (32) erstreckende erste Seitenfaltenschweißnaht (16). In der dargestellten Ausführungsform liegt die erste Seitenfaltenschweißnaht (16) als ein nach außen gewandter Seitenfaltenschweißnahtsaum (17) vor. Sowohl die Orientierung der ersten Seitenfaltenschweißnaht (16) nach außen, d. h. vom Tascheninneren weg gewandt, wie auch die Ausbildung der Schweißnaht als Saum tragen kombiniert zu einer besonders ausgeprägten Standfestigkeit der erfindungsgemäßen Kunststofffolien-Bodenbeutels bei. Der Schweißsaum kann hierbei zum Beispiel über eine durchschnittliche Breite im Bereich von 1,5 bis 3,5 mm verfügen. Diesseits und jenseits dieser ersten Seitenfaltenschweißnaht (16) liegen ein erster und ein zweiter Seitenwandabschnitt (18, 20) vor, die sich jeweils von der ersten Seitenfaltenschweißnaht (16) bis zum ersten Seitenrand (4, 10) der Kunststofffolienvorderwand (2) bzw. der Kunststofffolienrückwand (8) erstrecken. In gleicher Weise verfügt die zweite Kunststofffolienseitenwand (22) über eine sich von dem Beutelöffnungsrand bis zum Beutelende (32) erstreckende zweite Seitenfaltenschweißnaht (24), wobei diesseits und jenseits dieser zweiten Seitenfaltenschweißnaht (24) ein erster und ein zweiter Seitenwandabschnitt (26, 28) vorliegen, die sich jeweils von dieser zweiten Seitenfaltenschweißnaht (24) bis zum zweiten Seitenrand (6, 12) der Kunststofffolienvorderwand (2) bzw. der Kunststofffolienrückwand (8) erstrecken. In entsprechender Weise ist bei der dargestellten Ausführungsform auch die zweite Seitenfaltenschweißnaht (24) als ein nach außen gewandter Seitenfaltenschweißnahtsaum (25) ausgebildet. Am Beutelende (32) liegt ein Kunststofffolienbeutelboden (68) vor, der im Übergang zur Vorderwand (2) über eine erste Bodenfalz (52) und Übergang zur Rückwand (8) über eine zweite Bodenfalz (54) verfügt. An der Kunststofffolienvorderwand (2) ist eine erste Trageschlaufe (70) und an der Kunststofffolienrückwand (8) ist eine zweite Trageschlaufe (72) angebracht. Diese Trageschlaufen können zum Beispiel jeweils in Form eines Hohlschlauches, insbesondere eines doppellagigen Hohlschlauches ausgebildet sein. Die Trageschlaufen sind vorzugsweise innenseitig an der Kunststofffolienvorderwand (2) und der Kunststofffolienrückwand (8) angebracht. Die in Figur 1 wiedergegebene Ausführungsform eines erfindungsgemäßen Kunststofffolien-Bodenbeutels (1) verfügt im Übergang von der Kunststofffolienvorderwand (2) zu den ersten und zweiten Kunststofffolienseitenwänden (14, 22) über Falze (36, 38). In entsprechender Weise verfügt der erfindungsgemäße Kunststofffolien-Bodenbeutel (1) im Übergang von der Kunststofffolienrückwand (2) zu den ersten und zweiten Kunststofffolienseitenwänden (14, 22) über Falze (40,42). Die erste Ausführungsvariante des erfindungsgemäßen Kunststofffolien-Bodenbeutels (1) kann darüber hinaus mit einer Mittelfalte bzw. einem Mittelfalz (56) im Kunststofffolienbeutelboden (68) ausgestattet sein. Hierdurch gelingt regelmäßig eine leichtere Faltung im verpackten Zustand. Herstellungstechnisch hat es sich vielfach als besonders zweckmäßig erwiesen, den Kunststofffolienbeutelboden (68) an den Schmalseiten jeweils um dreieckförmige Elemente, vorzugsweise einstückig, zu ergänzen, aufgespannt zwischen den Mündungs- bzw. Eckpunkten (58,62, 76) bzw. den Mündungs- bzw. Eckpunkten (60, 64,80). Bei dieser Ausgestaltung findet eine Verbindung mit dem ersten Seitenwandabschnitt (18) der ersten Seitenwand (14) entlang der Schweißnaht zwischen den Mündungs- bzw. Eckpunkten (58) und (62) und eine Verbindung mit dem zweiten Seitenwandabschnitt (20) der ersten Seitenwand (14) entlang der Schweißnaht zwischen den Mündungs- bzw. Eckpunkten (62) und (76) statt. In entsprechender Weise liegt eine Verbindung des ersten Seitenwandabschnitts (26) der zweiten Seitenwand (22) entlang der Schweißnaht zwischen den Mündungs- bzw. Eckpunkten (60) und (64) und eine Verbindung des zweiten Seitenwandabschnitts (28) der zweiten Seitenwand (22) entlang der Schweißnaht zwischen den Mündungs- bzw. Eckpunkten (64) und (80) vor. Die Seitenfaltenschweißnähte (16, 24) können sich dabei zum Beispiel bis zu den Eck- bzw. Mündungspunkten (62) bzw. (64) der Schweißnähte (63) und (65) bzw. (67) und (69) erstrecken. Auch hat es sich vielfach als zweckmäßig erwiesen, die im Kunststofffolienbeutelboden (68) vorliegende Mittelfalte bzw. einem Mittelfalz (56) über den Kunststofffolienbeutelboden (68) hinaus in den an den Schmalseiten sich jeweils anschließenden dreieckförmigen Elementen bis zu den Eck- bzw. Mündungspunkten (62) bzw. (64) fortzusetzen (siehe gestrichelte Linien).

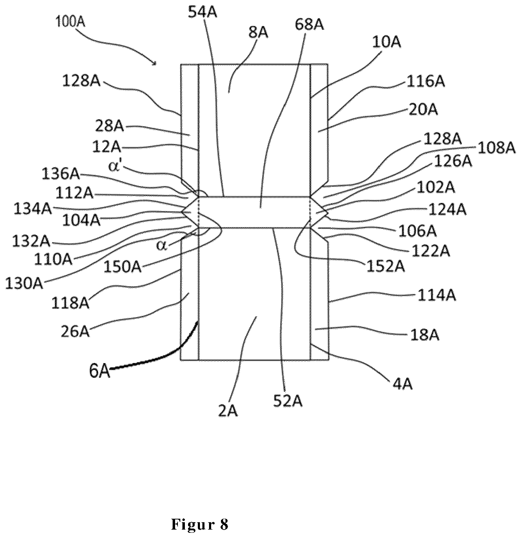

Details zur Herstellung der Schweißnähte (63) und (65) bzw. (67) und (69) finden sich im Zusammenhang mit der Beschreibung des Zuschnitts gemäß Figur 8 beschrieben.

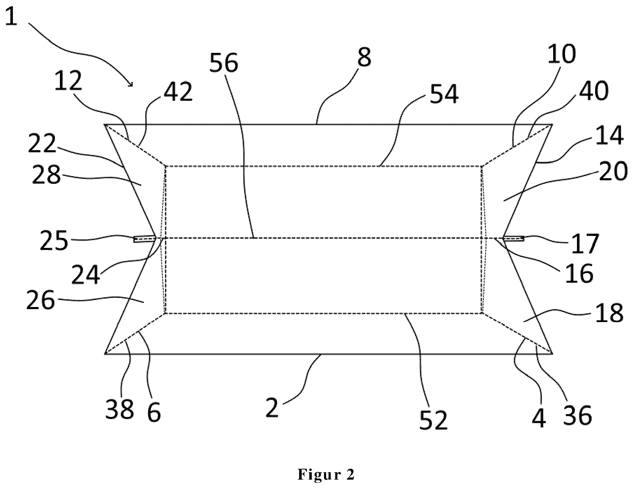

Die perspektivische Draufsicht der ersten Ausführungsvariante der Figur 1, wie in Figur 2 wiedergegebenen, lässt insbesondere auch die Struktur der ersten und zweiten Seitenwände (14, 22) erkennen. Die erste Seitenfaltenschweißnaht (16) ist dabei als ein nach außen gewandter Seitenfaltenschweißnahtsaum (17) ausgebildet. In entsprechender Weise ist die zweite Seitenfaltenschweißnaht (24) als ein nach außen gewandter Seitenfaltenschweißnahtsaum (25) ausgebildet. Figur 2 macht deutlich, wie auch großformatige erste Ausführungsvarianten des erfindungsgemäßen Kunststofffolien-Bodenbeutels (1), ohne befüllt zu sein, freistehend einen einwandfreien Öffnungsquerschnitt liefern, der ein sofortiges ungehindertes beidhändiges Befüllen gestattet. Es muss keine Hand zur Hilfe genommen werden, um die Beutelöffnung zunächst offenzuhalten.

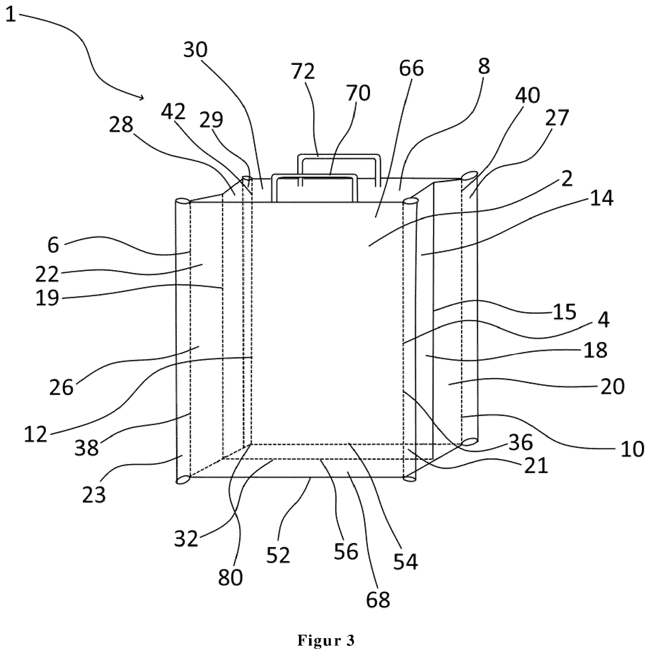

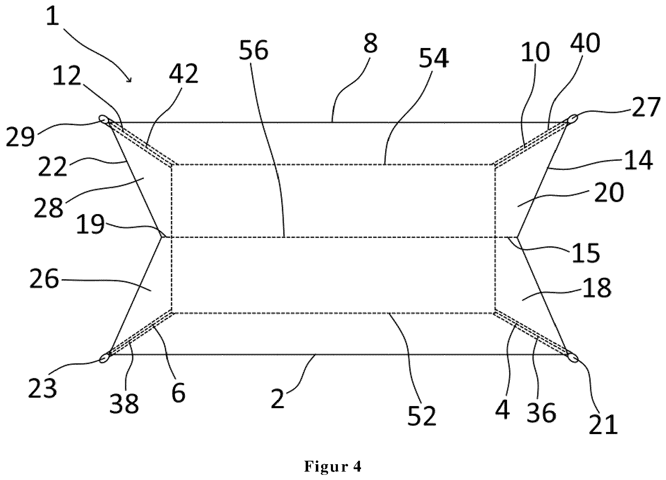

Figur 3 zeigt die zweite Ausführungsvariante eines erfindungsgemäßen Kunststofffolien-Bodenbeutels (1). Auch dieser Kunststofffolien-Bodenbeutel (1) ist mit einer Beutelöffnung (30) und einem gegenüberliegenden Beutelende (32), einer Kunststofffolienvorderwand (2) mit einem Beutelöffnungsrand sowie einem ersten Seitenrand (4) und einem gegenüberliegenden zweiten Seitenrand (6) und einer Kunststofffolienrückwand (8) mit einem Beutelöffnungsrand sowie mit einem ersten Seitenrand (10) und einem gegenüberliegenden zweiten Seitenrand (12) ausgestattet. Auch verfügt dieser erfindungsgemäße Kunststofffolien-Bodenbeutel (1) über eine erste Kunststofffolienseitenwand (14) mit einem Beutelöffnungsrand sowie über eine zweite Kunststofffolienseitenwand (22) mit einem Beutelöffnungsrand. Die erste Kunststofffolienseitenwand (14) weist eine sich von dem Beutelöffnungsrand im Wesentlichen bis zum Beutelende (32) erstreckende erste Seitenfalte (15) auf. Diese Seitenfalte kann auch als Seitenfalz ausgebildet sein. Diesseits und jenseits dieser ersten Seitenfalte (15) liegen ein erster und ein zweiter Seitenwandabschnitt (18, 20) vor, die sich jeweils von der ersten Seitenfalte (15) bis zum ersten Seitenrand (4, 10) der Kunststofffolienvorderwand (2) bzw. der Kunststofffolienrückwand (8) erstrecken. In gleicher Weise verfügt die zweite Kunststofffolienseitenwand (22) über eine sich von dem Beutelöffnungsrand bis zum Beutelende (32) erstreckende zweite Seitenfalte (19), wobei diesseits und jenseits dieser zweiten Seitenfalte (19) ein erster und ein zweiter Seitenwandabschnitt (26, 28) vorliegen, die sich jeweils von dieser zweiten Seitenfalte (19) bis zum zweiten Seitenrand (6, 12) der Kunststofffolienvorderwand (2) bzw. der Kunststofffolienrückwand (8) erstrecken. Am Beutelende (32) liegt ein Kunststofffolienbeutelboden (68) vor, der im Übergang zur Vorderwand (2) über eine erste Bodenfalz (52) und Übergang zur Rückwand (8) über eine zweite Bodenfalz (54) verfügt. An der Kunststofffolienvorderwand (2) ist eine erste Trageschlaufe (70) und an der Kunststofffolienrückwand (8) ist eine zweite Trageschlaufe (72) angebracht. Bei der in Figur 3 wiedergegebenen Ausführungsform eines erfindungsgemäßen Kunststofffolien-Bodenbeutels (1) sind im Übergang von der Kunststofffolienvorderwand (2) zu den ersten und zweiten Kunststofffolienseitenwänden (14, 22) diese Kunststofffolienvorderwand (2) einerseits mit der ersten Kunststofffolienseitenwand (14) und andererseits mit der zweiten Kunststofffolienseitenwand (22) unter Ausbildung von Hohlsäumen (21, 23) verschweißt. In entsprechender Weise verfügt der erfindungsgemäße Kunststofffolien-Bodenbeutel (1) im Übergang von der Kunststofffolienrückwand (2) zu den ersten und zweiten Kunststofffolienseitenwänden (14, 22) über mittels Verschweißung gewonnene Hohlsäume (27, 29). Anstelle der Hohlsäume können auch Schweißnähte oder Schweißnahtsäume im Übergang von der Vorder- bzw. Rückwand zu den jeweiligen Seitenwänden vorgesehen sein. Auch die zweite Ausführungsvariante des erfindungsgemäßen Kunststofffolien-Bodenbeutels (1) kann darüber hinaus mit einer Mittelfalte bzw. einem Mittelfalz (56) im Kunststofffolienbeutelboden (68) ausgestattet sein. Durch die Anbringung der genannten Hohlsäume bzw. Schweißnähte oder Schweißsäume gelangt man überraschenderweise zu großformatigen Kunststofffolien-Bodenbeuteln, die, ohne befüllt zu sein, freistehend einen einwandfreien Öffnungsquerschnitt liefern, der ein sofortiges ungehindertes beidhändiges Befüllen gestattet, wie dieses für die zweite Ausführungsvariante eines erfindungsgemäßen Kunststofffolien-Bodenbeutels gemäß Figur 3 in Figur 4 gezeigt ist.

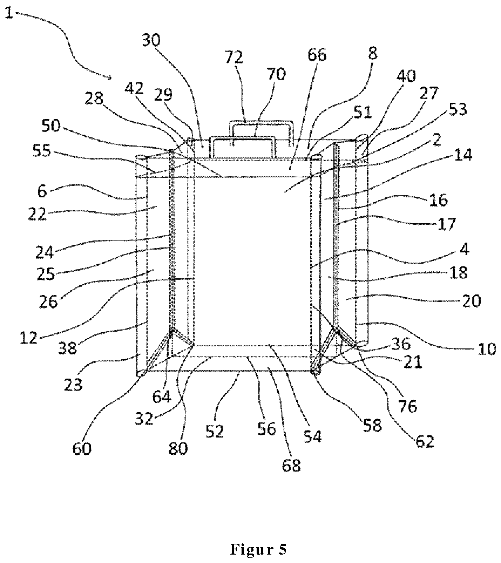

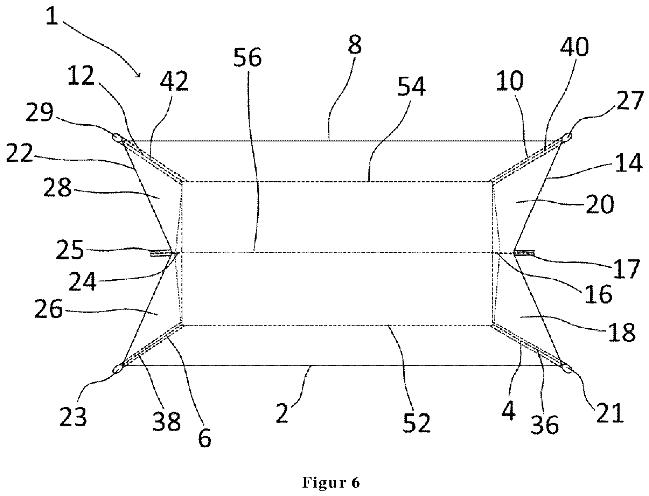

Die Figur 5 zeigt eine ganz besonders bevorzugte Ausführungsform eines erfindungsgemä-βen Kunststofffolien-Bodenbeutels (1). Darin sind die Seitenfalten der ersten und zweiten Seitenwand als nach außen gewandte Seitenfaltenschweißnähte (16, 24) bzw. konkreter als nach außen gewandte Seitenfaltenschweißnahtsäume (17, 25) ausgebildet. Auch liegen im Übergang von der Kunststofffolienvorderwand (2) zu den ersten und zweiten Kunststofffolienseitenwänden (14, 22) Hohlsäume (21, 23) vor, die durch Verschweißung der Kunststofffolienvorderwand (2) mit einerseits der ersten Kunststofffolienseitenwand (14) und andererseits der zweiten Kunststofffolienseitenwand (22) erhältlich sind bzw. erhalten wurden. In entsprechender Weise liegen auch im Übergang von der Kunststofffolienrückwand (8) zu den ersten und zweiten Kunststofffolienseitenwänden (14, 22) Hohlsäume (27, 29) vor, die durch Verschweißung der Kunststofffolienrückwand (8) mit einerseits der ersten Kunststofffolienseitenwand (14) und andererseits der zweiten Kunststofffolienseitenwand (22) erhältlich sind bzw. erhalten wurden. Zusätzlich sind die Beutelöffnungsränder von Kunststofffolienvorderwand (2), Kunststofffolienrückwand (8), erster Kunststofffolienseitenwand (14) und zweiter Kohlenstofffolienseitenwand (22) im Bereich der Beutelöffnung (30) jeweils durch einen umgeschlagenen Folienstreifen (50, 51, 53, 55) in der abgebildeten Ausführungsform unter Ausbildung eines umlaufenden Saumes verstärkt. Hierdurch wird die der Erfindung zugrunde liegende Aufgabe, ein sofortiges ungehindertes beidhändiges Befüllen des noch vollständig leeren Beutels, in Kombination mit den Seitenfaltenschweißnähten (16, 24) und den Hohlsäumen (21, 23, 27, 29) in besonders zuverlässiger gelöst (s.a. Figur 6). Auch bei der Ausführungsform gemäß Figur 5 hat es sich als vorteilhaft, insbesondere in der Handhabung und Faltung, des erfindungsgemäßen Kunststofffolien-Bodenbeutels (1) erwiesen, wenn die in dem Kunststofffolienbeutelboden (68) vorliegende Mittelfalte bzw. Mittelfalz (56) sich über den Kunststofffolienbeutelboden (68) hinaus in den an den Schmalseiten sich jeweils anschließenden dreieckförmigen Elementen bis zu den Eck- bzw. Mündungspunkten (62) bzw. (64) fortsetzt (siehe gestrichelte Linien).

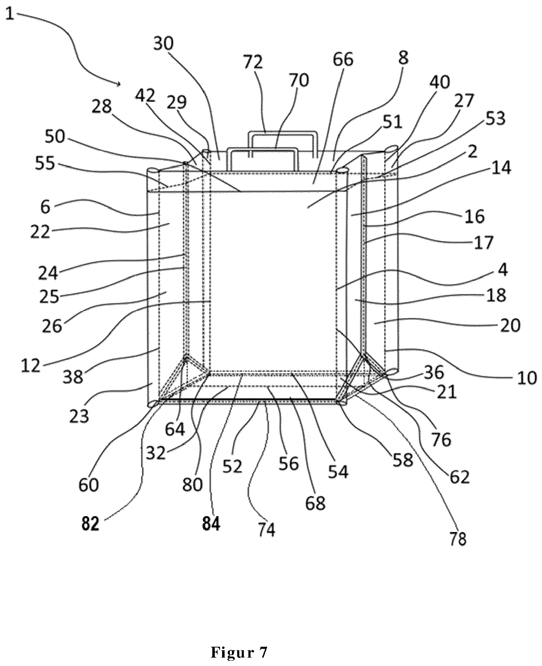

Figur 7 zeigt eine schematische perspektivische Seitenansicht einer bevorzugten Ausgestaltung der dritten Ausführungsvariante eines erfindungsgemäßen Kunststofffolien-Bodenbeutels und kann als Weiterentwicklung des Kunststofffolien-Bodenbeutels gemäß Figur 5 angesehen werden. Die in der Figur 7 verwendeten Bezugszeichen stimmen für identische Bestandteile mit den korrespondierenden Bezugszeichen der in den Figuren 1 bis 6 geschilderten Ausführungsformen überein. Zusätzlich zu der Ausführungsform des erfindungsgemäßen Kunststofffolien-Bodenbeutels gemäß Figur 5 sind bei dem Kunststofffolien-Bodenbeutel gemäß Figur 7 im Übergang von der ersten Kunststofffolienseitenwand (14) zum Kunststofffolienbeutelboden (68) die erste Kunststofffolienseitenwand (14) und der Kunststofffolienbeutelboden (68) miteinander verschweißt unter Ausbildung eines Saums bzw. Hohlsaums (78) verschweißt. Korrespondierend hierzu sind im Übergang von der zweiten Kunststofffolienseitenwand (22) zum Kunststofffolienbeutelboden (68) die zweite Kunststofffolienseitenwand (22) und der Kunststofffolienbeutelboden (68) unter Ausbildung eines Saums bzw. Hohlsaums (82) verschweißt. Darüber hinaus sind zur Ausbildung einer noch ausgeprägteren Standfestigkeit im unbefüllten Zustand im Übergang von der Kunststofffolienvorderwand (2) zum Kunststofffolienbeutelboden (68) die Kunststofffolienvorderwand (2) und der Kunststofffolienbeutelboden (68) unter Ausbildung eines Saums bzw. Hohlsaums (74) verschweißt. Korrespondierend hierzu sind im Übergang von der Kunststofffolienrückwand (8) zum Kunststofffolienbeutelboden (68) die Kunststofffolienrückwand (8) und der Kunststofffolienbeutelboden (68) unter Ausbildung eines Saums bzw. Hohlsaums (84) verschweißt.

Die Figur 8 zeigt eine schematische Draufsicht auf einen flach ausgelegten Folienzuschnitt (100A), wie er für die Herstellung der ersten Ausführungsvariante eines erfindungsgemäßen Kunststofffolien-Bodenbeutels (1), wie in Figur 1 wiedergegeben, eingesetzt werden kann. Der Zuschnitt (100A) verfügt über einen Kunststofffolienvorderwandabschnitt (2A) mit einem Beutelöffnungsrand sowie über einen Kunststofffolienrückwandabschnitt (8A) mit einem Beutelöffnungsrand. An der einen Seite des Kunststofffolienvorderwandabschnitts (2A) schließt sich der erste Seitenwandabschnitt (18A) der ersten Seitenwand und an der gegenüberliegenden Seite der erste Seitenwandabschnitt (26A) der zweiten Seitenwand an. In der dargestellten Ausführungsform sind der Kunststofffolienvorderwandabschnitt (2A) und die ersten Seitenwandabschnitte (18A, 26A) von erster und zweiter Seitenwand, die entlang der Seitenrandverläufe (4A) und (6A) ineinander übergehen, einstückig ausgebildet. Im Übergang von dem Kunststofffolienvorderwandabschnitt (2A) zu den genannten ersten Seitenwandabschnitten (18A, 26A), d.h. entlang der Seitenrandverläufe (4A) und (6A), liegen im fertigen Produkt Falten, Falze oder Schweißnähte, beispielsweise in Form eines Hohlsaums, vor. Hierzu korrespondierend geht der Kunststofffolienrückwandabschnitt (8A) entlang der Seitenrandverläufe (10A) und (12A) über in den zweiten Seitenwandabschnitt (20A) der ersten Seitenwand und an der gegenüberliegenden Seite in den zweiten Seitenwandabschnitt (28A) der zweiten Seitenwand. Der Kunststofffolienvorderwandabschnitt (2A) und der Kunststofffolienrückwandabschnitt (8A) sind in dem Zuschnitt (100) über den Kunststofffolienbeutelbodenabschnitt (68A) miteinander verbunden. In der dargestellten Ausführungsform liegen der Kunststofffolienvorderwandabschnitt (2A), einschließlich der ersten Seitenwandabschnitte (18A, 26A), der Kunststofffolienrückwandabschnitt (8A), einschließlich der zweiten Seitenwandabschnitte (20A, 28A), und der Kunststofffolienbeutelbodenabschnitt (68A) einstückig vor. Der Kunststofffolienbeutelboden des aus dem Zuschnitt (100A) gefertigten Kunststofffolien-Bodenbeutels ist im Wesentlichen rechteckig ausgeformt (angedeutet durch die gepunkteten Linien), kann jedoch auch eine quadratische Grundform haben. Der Beutelbodenabschnitt (68A) verfügt an seinen gegenüberliegenden Seiten über dreieckig ausgeformte oder trapezförmige Verlängerungen (102A, 104A). Demgemäß kann der Zuschnitt (100A) aus einem einzigen rechteckigen Folienstreifen durch Ausstanzen oder Ausschneiden von vier dreieckigen oder trapezförmigen Segmenten 106A, 108A, 110A und 112A erhalten werden. Indem man zum Beispiel den Kunststofffolienvorderwandabschnitt (2A), den Kunststofffolienrückwandabschnitt (8A) und die dreieckig ausgeformten oder trapezförmigen Verlängerungen (102A, 104A) hochklappt und die die erste Seitenwand bildenden ersten Seitenwandabschnitte (18A, 26A) sowie die die zweite Seitenwand bildenden zweiten Seitenwandabschnitte (20A, 28A) aufeinander zuführt, können die aneinander angrenzenden Randverläufe (114A) und (116A) sowie (118A) und (120A) und ebenfalls die Randverläufe der dreieckig ausgeformten oder trapezförmigen Verlängerungen (122A) und (124A) sowie (126A) und (128A) einerseits und (130A) und (132A) sowie (134A) und (136A) andererseits miteinander verbunden, insbesondere verschweißt werden unter Ausbildung der Schweißnähte (63) und (65) bzw. (67) und (69). Auf diese Weise kann man zu der ersten Ausführungsvariante des erfindungsgemäßen Kunststofffolien-Bodenbeutels gelangen. Mit den gestrichelten Linien werden die einander gegenüberliegenden Bodenseitenränder (150A) und (152A) angedeutet, welche man bei Fertigstellung des Kunststofffolienbeutels aus dem Kunststofffolienbeutelbodenabschnitt (68A) erhält.

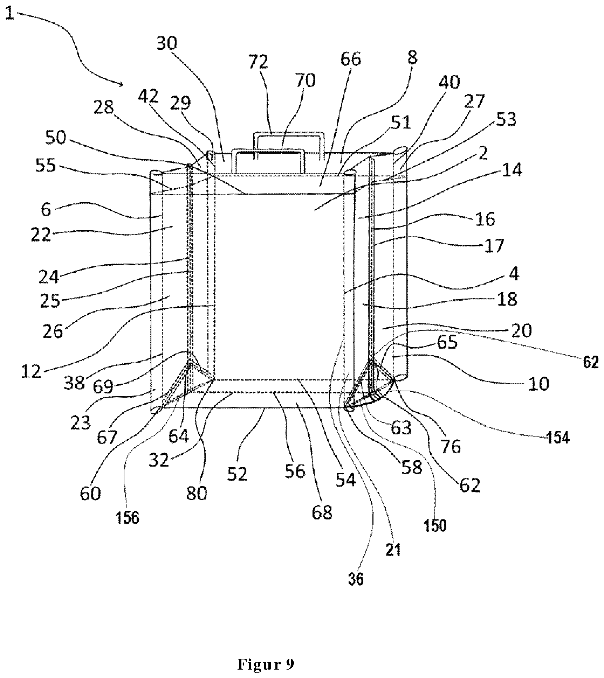

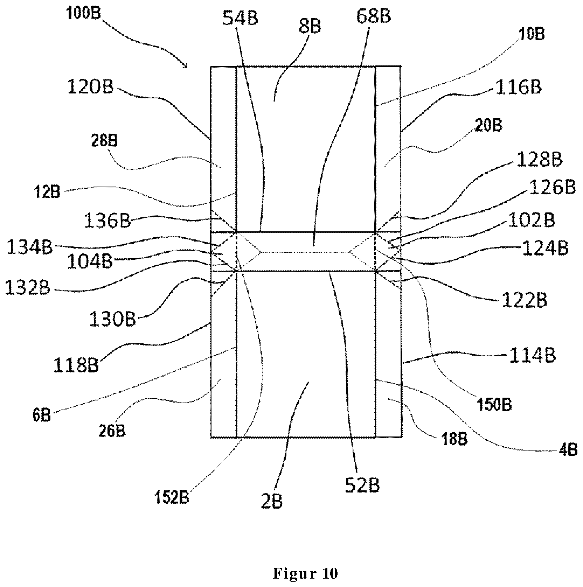

Figur 9 zeigt eine schematische perspektivische Seitenansicht einer dritten Ausführungsvariante eines erfindungsgemäßen Kunststofffolien-Bodenbeutels, gebildet aus einem rechteckförmigen Zuschnitt, wie in Figur 10 dargestellt. In diesem Zuschnitt werden Merkmale, die auch in dem Zuschnitt gemäß Figur 8 zu finden sind, mit identischen Bezugszeichen bezeichnet. Indem dieser Zuschnitt nicht über die dreieckförmigen Ausstanzungen des Zuschnitts gemäß Figur 8 verfügt, werden beim Zusammenführen und Verschweißen der die erste Seitenwand bildenden ersten Seitenwandabschnitte (18, 26) sowie der die zweite Seitenwand bildenden zweiten Seitenwandabschnitte (20B, 28) die erste Seitenfaltenschweißnaht (16) und die zweite Seitenfaltenschweißnaht (24) in einer Weise gebildet, dass sie beide, anders als bei der Ausführungsform gemäß Figur 1, sich bis zum Kunststofffolienbeutelboden erstrecken. Wie in Figur 9 dargestellt, liegen in der Nähe des Kunststofffolienbeutelbodens bei der ersten und der zweiten Seitenwand im Wesentlichen deckungsgleiche dreieckförmige Abschnitte aneinander an. Diese bilden sich beim Zusammenfügen des Zuschnitts, wie er in Figur 10 wiedergegeben ist.

Die Figur 10 zeigt im Detail eine schematische Draufsicht auf einen flach ausgelegten Folienzuschnitt (100B), wie er für die Herstellung der ersten, zweiten und dritten Ausführungsvariante eines erfindungsgemäßen Kunststofffolien-Bodenbeutels (1), wie z.B. in Figur 9 wiedergegeben, eingesetzt werden kann. Der Zuschnitt (100B) verfügt über einen Kunststofffolienvorderwandabschnitt (2B) mit einem Beutelöffnungsrand sowie über einen Kunststofffolienrückwandabschnitt (8B) mit einem Beutelöffnungsrand. An der einen Seite des Kunststofffolienvorderwandabschnitts (2B) schließt sich der erste Seitenwandabschnitt (18B) der ersten Seitenwand und an der gegenüberliegenden Seite der erste Seitenwandabschnitt (26B) der zweiten Seitenwand an. In der dargestellten Ausführungsform sind der Kunststofffolienvorderwandabschnitt (2B) und die ersten Seitenwandabschnitte (18B, 26B) von erster und zweiter Seitenwand einstückig ausgebildet. Im Übergang von dem Kunststofffolienvorderwandabschnitt (2B) zu den genannten ersten Seitenwandabschnitten (18B, 26B) liegen im fertigen Produkt Falten, Falze oder Schweißnähte, beispielsweise in Form eines Hohlsaums, vor. Hierzu korrespondierend verfügt der Kunststofffolienrückwandabschnitt (8B) über einen zweiten Seitenwandabschnitt (20B) der ersten Seitenwand und an der gegenüberliegenden Seite über einen zweiten Seitenwandabschnitt (28B) der zweiten Seitenwand. Der Kunststofffolienvorderwandabschnitt (2B) und der Kunststofffolienrückwandabschnitt (8B) sind in dem Zuschnitt (100B) über den Beutelbodenabschnitt (68B) miteinander verbunden. In der dargestellten Ausführungsform liegen der Kunststofffolienvorderwandabschnitt (2B), einschließlich der ersten Seitenwandabschnitte (18B, 26B), der Kunststofffolienrückwandabschnitt (8B), einschließlich der zweiten Seitenwandabschnitte (20B, 28B), und der Beutelbodenabschnitt (68B) einstückig vor. Der Kunststofffolienbeutelboden des aus dem Zuschnitt (100B) gefertigten Kunststofffolien-Bodenbeutels ist im Wesentlichen rechteckig ausgeformt (angedeutet durch die gepunkteten Linien), kann jedoch auch eine quadratische Grundform haben. Der Beutelbodenabschnitt (68B) verfügt an seinen gegenüberliegenden Seiten über rechteckig ausgeformte Verlängerungen (102B, 104B). Diese rechteckig ausgeformten Verlängerungen (102B) und (104B) liegen einstückig mit den ersten Seitenwandabschnitten (18B) und (26B) bzw. mit den zweiten Seitenwandabschnitten (20B) und (28B) vor. Demgemäß kann der Zuschnitt (100B) aus einem einzigen rechteckigen Folienstreifen erhalten werden. Indem man zum Beispiel den Kunststofffolienvorderwandabschnitt (2B), den Kunststofffolienrückwandabschnitt (8B) hochklappt und die die erste Seitenwand bildenden ersten Seitenwandabschnitte (18B, 26B) sowie die die zweite Seitenwand bildenden zweiten Seitenwandabschnitte (20B, 28B) aufeinander zuführt, können die aneinander angrenzenden Randverläufe (114B) und (116B) sowie (118B) und (120B) miteinander verbunden, insbesondere verschweißt werden unter Ausbildung des Beutel- bzw. Taschenkörpers. Indem man die beim Hochklappen von Vorderund Rückwand aneinander zur Anlage kommenden, in Figur 10 mit gestrichelten Linien angedeuteten Areale (122B) und (124B) sowie (126B) und (128B) einerseits und (130B) und (132B) sowie (134B) und (136B) andererseits miteinander verbindet, insbesondere verschweißt, werden die Schweißnähte (63) und (65) bzw. (67) und (69) ausgebildet. In einer zweckmäßigen Ausgestaltung werden hierfür die dreieckigen Areale (102B) und (104B) aus der Ebene der Bodenfläche (68B) hochgeklappt, wobei gleichzeitig die Vorder- und die Rückwandabschnitte (2B) und (8B) aufeinander zu geführt werden, sodass die Randverläufe (114B) und (116B) einerseits und (118B) und (120B) andererseits miteinander verbunden bzw. verschweißt werden können. Es entstehen hierbei auf beiden Seitenwandarealen jeweils zwei einander im Wesentlichen in Deckung befindliche Dreiecksbereiche

Hierbei enthält der außenliegende dreieckförmige Abschnitt der ersten Seitenwand, der begrenzt ist durch die Schweißnähte (63) und (65), die erste Seitenfaltenschweißnaht (16). Der innenliegende dreieckförmige Abschnitt erstreckt sich von der Faltlinie (150B) bis zu dem Schnittpunkt der Schweißnähte (63) und (65) mit der ersten Seitenfaltenschweißnaht (16) bzw. dem Treffpunkt der gestrichelten Linien (124B) und (126B). In entsprechender Weise werden für die zweite Seitenwand korrespondierende innen- und außenliegende dreieckförmige Abschnitte ausgebildet.

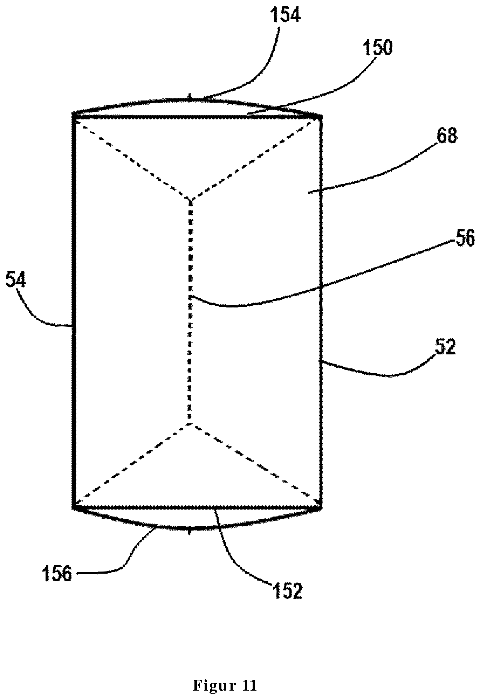

Figur 11 zeigt eine schematische perspektivische Draufsicht auf die Unterseite des erfindungsgemäßen Kunststofffolien-Bodenbeutels gemäß Figur 9. Der Beutelboden (68) ist mit Faltlinien (gestrichelte Linie), beispielsweise in Form der Mittelfalz (56), ausgestattet, die ein leichtes Zusammenfalten gestatten. Der Beutelboden (68) wird begrenzt durch die erste Bodenfalte (52), die gegenüberliegende zweite Bodenfalte (54) sowie die ebenfalls einander gegenüberliegenden dritten und vierten Bodenfalten (150) und (152). Während die vorangehend im Zusammenhang mit der Figur 10 beschriebenen innenliegenden dreieckförmigen Abschnitte im Bodenbereich von den dritten und vierten Bodenfalte (150) und (152) begrenzt werden, werden die jeweiligen außenliegenden dreieckförmigen Abschnitte durch die im Wesentlichen hierzu parallel verlaufenden bodenseitigen Randverläufe (154) und (156) begrenzt. Die genannten innen- und außenliegenden dreieckförmigen Abschnitte können dabei sowohl eng aneinander anliegen als auch, wie in Figur 11 gezeigt, voneinander beabstandet vorliegen.

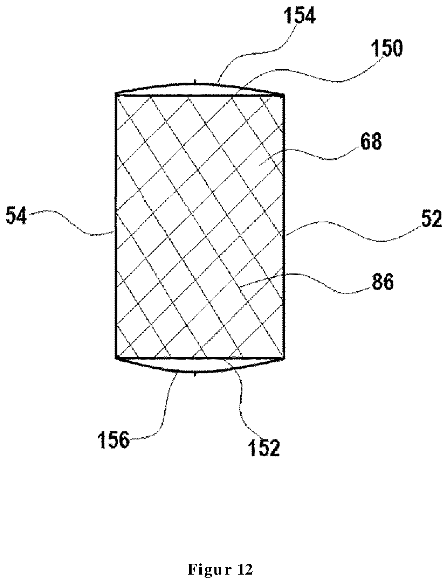

Figur 12 zeigt eine schematische perspektivische Draufsicht auf die Unterseite eines erfindungsgemäßen Kunststofffolien-Bodenbeutels, die im Wesentlichen mit der in Figur 11 dargestellten Konstruktion des Beutelbodens übereinstimmt. Bei der Ausführungsform des erfindungsgemäßen Kunststofffolien-Bodenbeutels (1) gemäß Figur 12 ist die Außenseite des Beutelbodens (68) mit einem geschweißten Prägemuster (86) in Wabenform ausgestattet. Durch Verwendung geschweißter Prägemuster gelangt man äußerst effizient zu einem Beutel, der auch im unbefüllten Zustand ohne äußere Hilfe oder Hilfsmittel offengehalten und damit beidhändig befüllt werden kann.

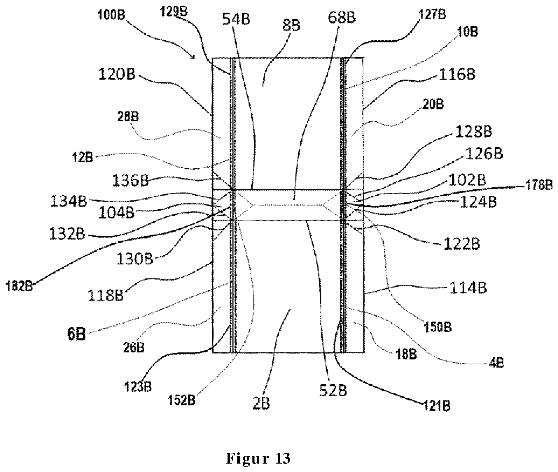

Figur 13 zeigt eine schematische perspektivische Draufsicht auf eine weitere Ausführungsform eines Folienzuschnitts gemäß Figur 10. Die in der Figur 13 verwendeten Bezugszeichen stimmen für identische Bestandteile mit den korrespondierenden Bezugszeichen der für Figur 10 geschilderten Ausführungsform überein. Zusätzlich zu dieser Ausführungsform verfügt der in Figur 13 abgebildete Folienzuschnitt über entlang der einander gegenüberliegenden Seitenrandverläufe (4B) und (6B) jeweils vorliegende Schweißnähte (121B) und (123B), die vorzugsweise als Saum und besonders bevorzugt als Hohlsaum ausgebildet sind. Ferner verfügt der in Figur 13 abgebildete Folienzuschnitt über entlang der dritten und vierten Bodenseitenränder (150B, 152B) jeweils vorliegende Schweißnähte (178B) und (182B), die ebenfalls vorzugsweise als Saum oder Hohlsaum ausgebildet sind. Bevorzugt geht, wie in Figur 13 dargestellt, die Schweißnaht (178B) an ihren einander gegenüberliegenden Enden im Wesentlichen übergangslos über in die Schweißnaht (121B) und die Schweißnaht (127B), und die Schweißnaht (182B) geht an ihren einander gegenüberliegenden Enden bevorzugt ebenfalls im Wesentlichen übergangslos über in die Schweißnaht (123B) und die Schweißnaht (123B). Mit dem geschilderten Folienzuschnitt gelangt man effizient zu den erfindungsgemäßen Kunststofffolien-Bodenbeuteln, insbesondere der zweiten und dritten Ausführungsvariante.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Kunststofffolien-Bodenbeutel (1) mit einer Beutelöffnung (30) und einem gegenüberliegenden Beutelende (32), umfassend
- eine Kunststofffolienvorderwand (2) mit einem Beutelöffnungsrand sowie einem ersten Seitenrand (4) und einem gegenüberliegenden zweiten Seitenrand (6),
- eine Kunststofffolienrückwand (8) mit einem Beutelöffnungsrand sowie mit einem ersten Seitenrand (10) und einem gegenüberliegenden zweiten Seitenrand (12),
- eine erste Kunststofffolienseitenwand (14) mit einem Beutelöffnungsrand sowie mit einer sich von oder beabstandet von dem Beutelöffnungsrand in Richtung des Beutelendes (32) oder bis zum Beutelende (32) erstreckenden ersten Seitenfalte (15), umfassend diesseits und jenseits der ersten Seitenfalte (15) einen ersten und einen zweiten Seitenwandabschnitt (18, 20), die sich jeweils von der ersten Seitenfalte (15) bis zum ersten Seitenrand (4, 10) der Kunststofffolienvorderwand (2) bzw. der Kunststofffolienrückwand (8) erstrecken,
- eine zweite Kunststofffolienseitenwand (22) mit einem Beutelöffnungsrand sowie mit einer sich von oder beabstandet von dem Beutelöffnungsrand in Richtung des Beutelendes (32) oder bis zum Beutelende (32) erstreckenden zweiten Seitenfalte (19), umfassend diesseits und jenseits der zweiten Seitenfalte (19) einen ersten und einen zweiten Seitenwandabschnitt (26, 28), die sich jeweils von der zweiten Seitenfalte (19) bis zum zweiten Seitenrand (6, 12) der Kunststofffolienvorderwand (2) bzw. der Kunststofffolienrückwand (8) erstrecken, und
- einen Kunststofffolienbeutelboden (68) mit einer Innen- und einer Außenseite, wobei im Übergang von der Kunststofffolienvorderwand (2) zum ersten Seitenwandabschnitt (18) der ersten Kunststofffolienseitenwand (14), insbesondere entlang und im Bereich einer Falte (36) oder Falz, die Kunststofffolienvorderwand (2) und der erste Seitenwandabschnitt (18) der ersten Kunststofffolienseitenwand (14) geschweißt sind, insbesondere miteinander verschweißt oder miteinander verklebt vorliegen, insbesondere unter Ausbildung eines Saums oder Hohlsaums (21), und/oder, vorzugsweise und, dass
im Übergang von der Kunststofffolienvorderwand (2) zum ersten Seitenwandabschnitt (26) der zweiten Kunststofffolienseitenwand (22), insbesondere entlang und im Bereich einer Falte (38) oder Falz, die Kunststofffolienvorderwand (2) und der erste Seitenwandabschnitt (26) der zweiten Kunststofffolienseitenwand (22) geschweißt sind, insbesondere miteinander verschweißt oder miteinander verklebt vorliegen, insbesondere unter Ausbildung eines Saums oder Hohlsaums (23), und/oder, vorzugsweise und, dass
im Übergang von der Kunststofffolienrückwand (8) zum zweiten Seitenwandabschnitt (20) der ersten Kunststofffolienseitenwand (14), insbesondere entlang und im Bereich einer Falte (40) oder Falz, die Kunststofffolienrückwand (8) und der zweite Seitenwandabschnitt (20) der ersten Kunststofffolienseitenwand (14) geschweißt sind, insbesondere miteinander verschweißt oder miteinander verklebt vorliegen, insbesondere unter Ausbildung eines Saums oder Hohlsaums (27), und/oder, vorzugsweise und, dass
im Übergang von der Kunststofffolienrückwand (8) zum zweiten Seitenwandabschnitt (28) der zweiten Kunststofffolienseitenwand (22), insbesondere entlang und im Bereich einer Falte (42) oder Falz, die Kunststofffolienrückwand (8) und der zweite Seitenwandabschnitt (28) der zweiten Kunststofffolienseitenwand (22) geschweißt sind, insbesondere miteinander verschweißt oder miteinander verklebt vorliegen, insbesondere unter Ausbildung eines Saums oder Hohlsaums (29).

2. Kunststofffolien-Bodenbeutel (1) nach Anspruch 1, **dadurch gekennzeichnet, dass** die erste Seitenfalte (15) abschnittsweise oder vollständig in Form einer, insbesondere nach außen gewandten, Seitenfaltenschweiß- oder -klebenaht (16) ausgebildet ist und/oder, vorzugsweise und, dass
die zweite Seitenfalte (19) abschnittsweise oder vollständig in Form einer, insbesondere nach außen gewandten. Seitenfaltenschweiß- oder -klebenaht (24) ausgebildet ist.

3. Kunststofffolien-Bodenbeutel (1) nach einem der vorangehenden Ansprüche,
**dadurch gekennzeichnet, dass**
die Kunststofffolienvorderwand (2) im Bereich des Beutelöffnungsrands innenund/oder außenseitig, insbesondere innenseitig, einen ein- oder mehrlagigen Folienstreifen (50) aufweist und/oder, vorzugsweise und, dass
die Kunststofffolienrückwand (8) im Bereich des Beutelöffnungsrands innenund/oder außenseitig, insbesondere innenseitig, einen ein- oder mehrlagigen Folienstreifen (51) aufweist und/oder, insbesondere und, dass
die erste Kunststofffolienseitenwand (14) im Bereich des Beutelöffnungsrands innen- und/oder außenseitig, insbesondere innenseitig, einen ein- oder mehrlagigen Folienstreifen (53) aufweist und/oder, insbesondere und, dass
die zweite Kunststofffolienseitenwand (22) im Bereich des Beutelöffnungsrands innen- und/oder außenseitig, insbesondere innenseitig, einen ein- oder mehrlagigen Folienstreifen (55) aufweist.

4. Kunststofffolien-Bodenbeutel (1) nach Anspruch 3, **dadurch gekennzeichnet, dass** der ein- oder mehrlagige Folienstreifen (50, 51, 53, 55), insbesondere als Bestandteil der Kunststofffolienvorderwand (2), der Kunststofffolienrückwand (8), der ersten Kunststofffolienseitenwand (14) und/oder der zweiten Kunststofffolienseitenwand (22), einen Öffnungsrandsaum darstellt und/oder einstückig mit der Kunststofffolienvorderwand (2), der Kunststofffolienrückwand (8), der ersten Kunststofffolienseitenwand (14) bzw. der zweiten Kunststofffolienseitenwand (22) ausgebildet ist.

5. Kunststofffolien-Bodenbeutel (1) nach einem der vorangehenden Ansprüche,
**dadurch gekennzeichnet, dass**
diese neben der ersten und zweiten Seitenfaltenschweiß- oder -klebenaht (16, 24) im Bereich der Kunststofffolienvorderwand (2), der Kunststofffolienrückwand (8), der ersten Kunststofffolienseitenwand (14) und der zweiten Kunststofffolienseitenwand (12), insbesondere einschließlich der jeweiligen Übergänge, keine weitere sich vom oder beabstandet vom Beutelöffnungsrand in Richtung des Beutelendes (32) oder bis zum Beutelende (32) erstreckende Schweiß- oder -klebenaht aufweist

6. Kunststofffolien-Bodenbeutel (1) nach einem der vorangehenden Ansprüche,
**dadurch gekennzeichnet, dass**
die Kunststofffolienvorderwand (2) und/oder Kunststofffolienrückwand (8) ein einoder mehrlagiges Folienmaterial (66) aufweisen und/oder dass das Folienmaterial (66) von Kunststofffolienvorderwand (2) und/oder Kunststofffolienrückwand (8) aus Polyolefinen, bevorzugt Polyethylen und/oder Polypropylen und besonders bevorzugt HD-Polyethylen, umfasst oder hieraus besteht.

7. Kunststofffolien-Bodenbeutel (1) nach einem der vorangehenden Ansprüche,
**dadurch gekennzeichnet, dass**
dieser im Wesentlichen einstückig ausgebildet ist und/oder dass
die Kunststofffolienvorderwand (2), der Kunststofffolienbeutelboden (68) und die Kunststofffolienrückwand (8) zusammenhängend, bevorzugt ohne Verbindungsnaht, besonders bevorzugt einstückig, vorliegen und/oder dass
die Kunststofffolienvorderwand (2), der erste Seitenwandabschnitt (18) der ersten Kunststofffolienseitenwand (14) und der erste Seitenwandabschnitt (26) der zweiten Kunststofffolienseitenwand (22) zusammenhängend, bevorzugt ohne Verbindungsnaht, besonders bevorzugt einstückig, vorliegen und/oder dass
die Kunststofffolienrückwand (8), der zweite Seitenwandabschnitt (20) der ersten Kunststofffolienseitenwand (14) und der zweite Seitenwandabschnitt (28) der zweiten Kunststofffolienseitenwand (22) zusammenhängend, bevorzugt ohne Verbindungsnaht, besonders bevorzugt einstückig, vorliegen.

8. Kunststofffolien-Bodenbeutel (1) nach einem der vorangehenden Ansprüche,
**dadurch gekennzeichnet, dass**
im Übergang von der Kunststofffolienvorderwand (2) zum Kunststofffolienbeutelboden (68) eine Falte oder Falz (auch erste Bodenfalte oder -falz (52) genannt) vorliegt und/oder dass im Übergang von der Kunststofffolienvorderwand (2) zum Kunststofffolienbeutelboden (68), insbesondere entlang und im Bereich der Falte oder Falz (52), die Kunststofffolienvorderwand (2) und der Kunststofffolienbeutelboden (68) geschweißt sind, insbesondere miteinander verschweißt, oder miteinander verklebt vorliegen, insbesondere unter Ausbildung eines Saums oder Hohlsaums (74), und/oder, vorzugsweise und, dass
im Übergang von der Kunststofffolienrückwand (8) zum Kunststofffolienbeutelboden (68) eine Falte oder Falz (auch zweite Bodenfalte oder -falz (54) genannt) vorliegt und/oder dass im Übergang von der Kunststofffolienrückwand (8) zum Kunststofffolienbeutelboden (68), insbesondere entlang und im Bereich der Falte oder Falz (54), die Kunststofffolienrückwand (8) und der Kunststofffolienbeutelboden (68) geschweißt sind, insbesondere miteinander verschweißt, oder miteinander verklebt vorliegen, insbesondere unter Ausbildung eines Saums oder Hohlsaums (84).

9. Kunststofffolien-Bodenbeutel (1) nach einem der vorangehenden Ansprüche,
**dadurch gekennzeichnet, dass**
im Übergang von der ersten Kunststofffolienseitenwand (14) zum Kunststofffolienbeutelboden (68) eine Falte oder Falz (auch dritte Bodenfalte oder -falz (150) genannt) vorliegt und/oder dass
im Übergang von der ersten Kunststofffolienseitenwand (14) zum Kunststofffolienbeutelboden (68), insbesondere entlang und im Bereich der Falte oder Falz (150), die erste Kunststofffolienseitenwand (14) und der Kunststofffolienbeutelboden (68) geschweißt sind, insbesondere miteinander verschweißt, oder miteinander verklebt vorliegen, insbesondere unter Ausbildung eines Saums oder Hohlsaums (78), und/oder, vorzugsweise und, dass
im Übergang von der zweiten Kunststofffolienseitenwand (22) zum Kunststofffolienbeutelboden (68) eine Falte oder Falz (auch vierte Bodenfalte oder -falz (152) genannt) vorliegt und/oder dass im Übergang von der zweiten Kunststofffolienseitenwand (22) zum Kunststofffolienbeutelboden (68), insbesondere entlang und im Bereich der Falte oder Falz (152), die zweite Kunststofffolienseitenwand (22) und der Kunststofffolienbeutelboden (68) geschweißt sind, insbesondere miteinander verschweißt, oder miteinander verklebt vorliegen, insbesondere unter Ausbildung eines Saums oder Hohlsaums (82).

10. Kunststofffolien-Bodenbeutel (1) nach einem der vorangehenden Ansprüche,
**dadurch gekennzeichnet, dass**
der Kunststofffolienbeutelboden (68) eine Mittelfalte (56) oder -falz (auch Mittelfalte oder -falz genannt) aufweist, die sich beabstandet vom oder vom ersten Seitenrand (4, 10) in Richtung des oder bis zum gegenüberliegenden zweiten Seitenrand (6, 12) erstreckt.

11. Kunststofffolien-Bodenbeutel (1) nach einem der vorangehenden Ansprüche,
**dadurch gekennzeichnet, dass**
die Breite der Kunststofffolienvorderwand (2) und/oder die Breite der Kunststofffolienrückwand (8) größer oder gleich, insbesondere größer, der Summe gebildet aus der Breite des ersten Seitenwandabschnitts (18) der ersten Kunststofffolienseitenwand (14) und des ersten Seitenwandabschnitts (26) der zweiten Kunststofffolienseitenwand (22) und/oder der Summe gebildet aus der Breite des zweiten Seitenwandabschnitts (20) der ersten Kunststofffolienseitenwand (14) und des zweiten Seitenwandabschnitts (28) der zweiten Kunststofffolienseitenwand (22) ist.

12. Kunststofffolien-Bodenbeutel (1) nach einem der vorangehenden Ansprüche,
**dadurch gekennzeichnet, dass**
der Kunststofffolienbeutelboden (68) ein, insbesondere auf der Außenseite angebrachtes, Prägeschweißmuster aufweist.

13. Kunststofffolien-Bodenbeutel (1) nach Anspruch 12, **dadurch gekennzeichnet, dass** das Prägeschweißmuster eine Wabenstruktur, eine Linienstruktur oder eine Ringstruktur umfasst oder darstellt.

14. Kunststofffolien-Bodenbeutel (1) nach einem der Ansprüche 1 bis 13, **dadurch gekennzeichnet, dass**
die erste Seitenfaltenschweiß- oder -klebenaht (16) und die zweite Seitenfaltenschweiß- oder -klebenaht (24) sich bis zum Beutelende erstrecken, insbesondere nicht mit dem Kunststofffolienbeutelboden (68) verklebt oder verschweißt sind, dass
sich von einem ersten Mündungspunkt (58), bei dem der erste Bodenfalz (52) in den ersten Seitenrand (4) der Kunststofffolienvorderwand (2) mündet, und der ersten Seitenfaltenschweiß- oder -klebenaht (16), beabstandet von dem Kunststofffolienbeutelboden (68), eine erste Schweiß- oder Klebenaht (63), insbesondere Schweißnaht, erstreckt und dass
sich von einem zweiten Mündungspunkt (76), bei dem der zweite Bodenfalz (54) in den ersten Seitenrand (10) der Kunststofffolienrückwand (8) mündet, und der ersten Seitenfaltenschweiß- oder -klebenaht (16) beabstandet von dem Kunststofffolienbeutelboden (68) eine zweite Schweiß- oder Klebenaht (65), insbesondere Schweißnaht, erstreckt und/oder dass
sich von einem dritten Mündungspunkt (60), bei dem der erste Bodenfalz (52) in den zweiten Seitenrand (6) der Kunststofffolienvorderwand (2) mündet, und der zweiten Seitenfaltenschweiß- oder -klebenaht (24) beabstandet von dem Kunststofffolienbeutelboden (68) eine dritte Schweiß- oder Klebenaht (65), insbesondere Schweißnaht, erstreckt und dass
sich von einem vierten Mündungspunkt (80), bei dem der zweite Bodenfalz (54) in den zweiten Seitenrand (12) der Kunststofffolienrückwand (8) mündet, und der zweiten Seitenfaltenschweiß- oder -klebenaht (24) beabstandet von dem Kunststofffolienbeutelboden (68) eine vierte Schweiß- oder Klebenaht (69), insbesondere Schweißnaht, erstreckt.

15. Kunststofffolien-Bodenbeutel (1) nach Anspruch 14, **dadurch gekennzeichnet, dass** die erste Seitenfaltenschweiß- oder -klebenaht (16), die erste Schweiß- oder Klebenaht (63) und die zweite Schweiß- oder Klebenaht (65) einen gemeinsamen ersten Mündungsbereich (62) aufweisen und/oder dass
die zweite Seitenfaltenschweiß- oder -klebenaht (24), die dritte Schweiß- oder Klebenaht (67) und die vierte Schweiß- oder Klebenaht (69) einen gemeinsamen zweiten Mündungsbereich (64) aufweisen.

16. Kunststofffolien-Bodenbeutel (1) nach Anspruch 15, **dadurch gekennzeichnet, dass** in dem Areal, das sich zwischen dem ersten Mündungspunkt (58), bei dem der erste Bodenfalz (52) in den ersten Seitenrand (4) der Kunststofffolienvorderwand (2) mündet, und dem zweiten Mündungspunkt (76), bei dem der zweite Bodenfalz (54) in den ersten Seitenrand (10) der Kunststofffolienrückwand (8) mündet, und dem ersten Mündungsbereich (62) aufspannt, zwei dreieckförmige Kunststofffolienabschnitte benachbart vorliegen, insbesondere aneinander anliegen, und/oder dass in dem Areal, das sich zwischen dem dritten Mündungspunkt (60), bei dem der erste Bodenfalz (52) in den zweiten Seitenrand (6) der Kunststofffolienvorderwand (2) mündet, und dem vierten Mündungspunkt (80), bei dem der zweite Bodenfalz (54) in den zweiten Seitenrand (12) der Kunststofffolienrückwand (8) mündet, und dem zweiten Mündungsbereich (64) aufspannt, zwei dreieckförmige Kunststofffolienabschnitte benachbart vorliegen, insbesondere aneinander anliegen.

17. Kunststofffolien-Bodenbeutel (1) nach einem der vorangehenden Ansprüche, ferner umfassend
mindestens ein erstes Trageelement (70), vorzugsweise an oder benachbart zur Beutelöffnung (30), an der Kunststofffolienvorderwand (2) und/oder mindestens ein zweites Trageelemente (72), vorzugsweise an oder benachbart zur Beutelöffnung (30), an der Kunststofffolienrückwand (8).

18. Kunststofffolien-Bodenbeutel (1) nach Anspruch 17, **dadurch gekennzeichnet, dass** das mindestens eine Trageelement (70, 72) ein Griffloch, eine Halteschlaufe oder einen Haltegriff darstellt.

19. Kunststofffolien-Bodenbeutel (1) nach Anspruch 17 oder 18, **dadurch gekennzeichnet, dass**
das erste Trageelement (70) im Bereich des ein- oder mehrlagige Folienstreifens (50), insbesondere Öffnungsrandsaums, der Kunststofffolienvorderwand (2) befestigt ist oder vorliegt und/oder dass
das zweite Trageelement (72) im Bereich des ein- oder mehrlagige Folienstreifens (51), insbesondere Öffnungsrandsaums, der Kunststofffolienrückwand (8) befestigt ist oder vorliegt.

20. Kunststofffolien-Bodenbeutel (1) nach einem der vorangehenden Ansprüche, ferner enthaltend
einen Einlegeboden, der insbesondere steifer ist als der Kunststofffolienbeutelboden (68).

21. Zuschnitt (100B) für einen Kunststofffolien-Bodenbeutel (1), insbesondere nach einem der Ansprüche 1 bis 16,
mit einer im Wesentlichen rechteckigen oder quadratischen Grundform und aus einer ein- oder mehrlagigen Kunststofffolie, umfassend
einen Kunststofffolienvorderwandabschnitt (2B),
einen sich hieran entlang einem ersten Bodenseitenrand (52B), insbesondere einstückig, anschließenden im Wesentlichen rechteckigen oder quadratischen Kunststofffolienbeutelbodenabschnitt (68B), enthaltend einander gegenüberliegende dritte und vierte Bodenseitenränder (150B, 152B), und
einen sich an diesen, gegenüberliegend zum Kunststofffolienvorderwandabschnitt (2B), entlang einem zweiten Bodenseitenrand (54B), insbesondere einstückig, anschließenden Kunststofffolienrückwandabschnitt (8B),
wobei der Kunststofffolienvorderwandabschnitt (2B) an einander gegenüberliegenden Seitenrandverläufen (4B, 6B), insbesondere einstückig, jeweils einen im Wesentlichen rechteckförmigen Erstreckungsabschnitt (18B, 26B) aufweist, wobei der Kunststofffolienrückwandabschnitt (8B) an einander gegenüberliegenden Seitenrandverläufen (10B, 12B), insbesondere einstückig, jeweils einen im Wesentlichen rechteckförmigen Erstreckungsabschnitt (20B, 28B) aufweist, und
wobei entlang der einander gegenüberliegenden Seitenrandverläufe (4B, 6B) des Kunststofffolienvorderwandabschnitts (2B) jeweils eine Schweißnaht (121B, 123B), insbesondere unter Ausbildung eines Saums oder Hohlsaums, vorliegt und wobei entlang der einander gegenüberliegenden Seitenrandverläufe (10B, 12B) des Kunststofffolienrückwandabschnitts (8B) jeweils eine Schweißnaht (127B, 129B), insbesondere unter Ausbildung eines Saums oder Hohlsaums, vorliegt.

22. Zuschnitt (100B) nach Anspruch 21, **dadurch gekennzeichnet, dass** entlang der dritten und vierten Bodenseitenränder (150B, 152B) jeweils eine Schweißnaht (178B, 182B), insbesondere unter Ausbildung eines Saums oder Hohlsaums, vorliegt, wobei vorzugsweise die Schweißnaht (178B) an ihren einander gegenüberliegenden Enden im Wesentlichen übergangslos übergeht in die Schweißnaht (121B) und die Schweißnaht (127B) und die Schweißnaht (182B) an ihren einander gegenüberliegenden Enden im Wesentlichen übergangslos übergeht in die Schweißnaht (123B) und die Schweißnaht (123B).

23. Verwendung des Kunststofffolien-Bodenbeutels (1) nach einem der Ansprüche 1 bis 20 als, insbesondere vielfach, wiederverwendbarer Beutel oder wiederverwendbare Tasche.
